# EUROPÄISCHE PATENTSCHRIFT

(11) **EP 1 146 236 B1**
(45) Veröffentlichungstag und Bekanntmachung des Hinweises auf die Patenterteilung: **23.06.2010**
(21) Anmeldenummer: 01109026.3
(22) Anmeldetag: 11.04.2001
(51) Int. Cl.: F16B 23/00, F16B 41/00, B25B 13/54

(54) **Sicherheitsvorrichtung für Schraubverbindungen**
Safety device for screw connections
Dispositif de sécurité pour assemblages filetés

(30) Priorität: 11.04.2000 DE 10017880; 25.09.2000 DE 10047367
(43) Veröffentlichungstag der Anmeldung: 17.10.2001
(73) Patentinhaber: Nunner, Dieter, 90592 Schwarzenbruck (DE); Hintze, Karlheinz, 90451 Nürnberg (DE)
(72) Erfinder: Nunner, Dieter, 90592 Schwarzenbruck (DE); Hintze, Karlheinz, 90451 Nürnberg (DE)
(74) Vertreter: Wallinger, Michael

(56) Entgegenhaltungen:
- DE-C- 326 328
- FR-A- 2 201 645
- FR-A- 2 314 025
- GB-A- 2 248 415
- US-A- 4 569 259
- US-A- 4 659 115

## Beschreibung

Die vorliegende Erfindung betrifft eine Sicherheitsvorrichtung und insbesondere eine Sicherheitsvorrichtung für Schraubverbindungen.

Die Erfindung wird nachfolgend an Sicherheitsvorrichtungen für Schraubverbindungen und insbesondere an Sicherheits-Schraubstopfen für Gasleitungen und dergleichen beschrieben.

Es ist darauf hinzuweisen, daß diese Beschreibung nicht als Einschränkung der Anwendung der Erfindung zu verstehen ist. Derartige Verbindungen können in vielfacher Weise in der Technik eingesetzt werden und, soweit die Sicherung von Schraubverbindungen betroffen ist, für alle Arten von Schraubverbindungen, unabhängig davon, ob dies in Verbindung mit Rohrleitungen für strömende Medien erfolgt oder aber, ob andere Arten von Schraubverbindungen oder dergleichen gesichert werden sollen.

Der unsachgemäße Umgang mit Gasleitungen, wenn z. B. Laien versuchen, vorhandene Gasanlagen zu verändern, oder aber auch, wenn Laien versuchen, den Gaszähler mit einem Bypass zu umgehen, führen immer zu folgenschweren Unfällen mit Toten und Verletzten. Zur Vermeidung derartiger Unfälle wäre es deshalb wünschenswert, wenn diese Gasleitungen so gestaltet werden könnten, daß es für Laien unmöglich ist, die Gasleitung ohne deren Zerstörung zu verändern.

Angriffspunkt für Manipulationsversuche sind häufig die Schraubverbindungen in Gasleitungen, insbesondere die Stopfen, die Leitungen abschließen, oder Stopfen, die zum Verschluß von Prüfbohrungen und dergleichen dienen.

Der vorliegenden Erfindung liegt insbesondere die Aufgabe zugrunde, zu verhindern, daß derartige Verschlußstopfen oder entsprechende Schraubverbindungen durch Unbefugte betätigt werden können.

Diese Aufgabe wird erfindungsgemäß durch den Gegenstand des unabhängigen Patentanspruchs gelöst. Vorteilhafte Weiterbildungen sind Gegenstand von Unteransprüchen. Erfindungsgemäß ist insbesondere eine Sicherheitsvorrichtung mit einer ersten Baueinheit und einer zweiten Baueinheit vorgesehen, wobei diese Baueinheiten derart miteinander koppelbar sind, daß zwischen ihnen eine Kraft oder ein Drehmoment übertragen werden kann. Eine dieser Baueinheiten, insbesondere die erste Baueinheit, weist eine im wesentlichen rotationssymmetrische Vertiefung auf. Diese rotationssymmetrische Vertiefung ist vorzugsweise konzentrisch zu einer Drehachse angeordnet, um welche die erste Baueinheit, insbesondere zur Montage oder Demontage, gedreht werden kann.

GB 2 248 415 stellt einen Gegenstand gemäß dem Oberbegriff von Anspruch 1 dar.

Die andere dieser Baueinheiten, insbesondere die zweite Baueinheit, weist ein Verbindungsteil auf, welches in die rotationssymmetrische Vertiefung der einen Baueinheit, also insbesondere der ersten Baueinheit, eingeschoben werden kann. Dieses Verbindungsteil weist wenigstens einen Reibkörper sowie eine Anpreßeinrichtung auf. Die Anpreßeinrichtung kann den bzw. die Reibkörper gegen eine Fläche der rotationssymmetrischen Vertiefung pressen, so daß eine Kraft- oder Drehmomentübertragung zwischen der ersten und der zweiten Baueinheit über einen Reibeingriff zwischen diesem oder diesen Reibkörper(n) und dieser Fläche erfolgen kann.

Vorzugsweise ist das Zusammenwirken zwischen der Anpreßeinrichtung, dem wenigstens einen Reibkörper sowie wenigstens einer Fläche der rotationssymmetrischen Vertiefung derart gestaltet, daß der Reibkörper zwischen einer Fläche der Anpreßeinrichtung und der Fläche der rotationssymmetrischen Vertiefung eingeklemmt werden kann und diese Klemmung gelöst werden kann.

Die Aufgabe wird ferner gelöst durch einen Stopfen zum Verschließen von Rohröffnungen oder dergleichen, welcher aus einer ersten Baueinheit besteht oder eine erste Baueinheit aufweist, die eine im wesentlichen rotationssymmetrische Vertiefung aufweist.

Eine Befestigungselement-Vorrichtung ist im Sinne der vorliegenden Erfindung insbesondere eine Schraube oder eine Mutter. Eine Schraube ist im Sinne der vorliegenden Erfindung insbesondere mit einem Außengewinde versehen und eine Mutter ist im Sinne der vorliegenden Erfindung insbesondere mit einem Innengewinde versehen. Die Befestigungselement-Vorrichtung dient vorzugsweise dazu, Schraubverbindungen zu erzeugen, über welche Umbauteile befestigt oder gesichert werden können. Die Befestigungselement-Vorrichtung kann aber auch anderen Zwecken dienen. Bevorzugt ist eine Befestigungselement-Vorrichtung oder als Mutter oder als Schraube gestaltet oder als Verschlußelement, wie Verschlußkappe, gestaltet. Besonders bevorzugt dient ein derartiges Verschlußelement zum Verschließen von Leitungen oder Rohren. Vorzugsweise ist ein derartiges Verschlußelement als Sicherheitskappe für Einrohr-Gaszähleranschlüsse gestaltet oder bestimmt.

Erfindungsgemäß ist insbesondere vorgesehen, daß die Befestigungselement-Vorrichtung ein Innenteil aufweist sowie ein relativbeweglich, und insbesondere drehbeweglich, gegenüber diesem Innenteil angeordnetes Außenteil.

Das Außenteil und/oder das Innenteil ist jeweils ein- oder mehrstückig gestaltet.

Erfindungsgemäß ist insbesondere vorgesehen, daß ein in das Außenteil eingeleitetes Drehmoment im wesentlichen nicht auf das Innenteil übertragen wird bzw. werden kann. Bevorzugt weist die Befestigungselement-Vorrichtung ein Gewinde auf, über welches die Befestigungselement-Vorrichtung mit einem weiteren Bauteil verschraubt werden kann. Vorzugsweise ist das Gewinde am Innenteil angeordnet oder fest mit dem Innenteil verbunden.

Besonders bevorzugt ist die Befestigungselement-Vorrichtung als Mutter gestaltet und weist ein Innenteil mit einem Innengewinde auf, wobei dieses Innenteil von einem drehbeweglich angeordneten Außenteil ummantelt ist. Das Außenteil erstreckt sich über die gesamte Länge des Innenteils der Mutter oder nur über einen Abschnitt dieses Innenteils. Die Länge des Außenteils der Mutter ist größer oder kleiner als die Länge des Innenteils oder entspricht der Länge des Innenteils. Vorzugsweise weist eine als Mutter gestaltetes Befestigungselement-Vorrichtung eine rotationssymmetrische Vertiefung bzw. eine erste Baueinheit mit rotationssymmetrischer Vertiefung auf. Die erste Baueinheit kann insbesondere das Innenteil oder die Mutter sein.

Besonders bevorzugt dient diese rotationssymmetrische Vertiefung dazu, daß über das Zusammenwirken dieser Vertiefung mit einer erfindungsgemäßen Werkzeugadapter-Vorrichtung die Mutter verschraubt oder gelöst werden kann.

Bevorzugte Gestaltungen einer derartigen rotationssymmetrischen Vertiefung werden im Rahmen dieser Erfindung in verschiedensten Ausführungsformen beschrieben.

Vorzugsweise weist die Mutter eine rotationssymmetrische Vertiefung auf, die fluchtend in bezug auf ein Innengewinde der Mutter angeordnet ist, und zwar insbesondere axial beabstandet. Gegebenenfalls erstreckt sich eine derartige rotationssymmetrische Vertiefung und ein Innengewinde der Mutter von unterschiedlichen Seiten in das Innenteil, und zwar insbesondere derart, daß axial zwischen dieser Vertiefung und diesem Innengewinde ein Zwischenflansch bzw. eine Trennwand vorgesehen ist, welche das Innengewinde und diese Vertiefung voneinander trennt. Die Trennwand erstreckt sich besonders bevorzugt im wesentlichen senkrecht zur Längsachse der Vertiefung.

Besonders bevorzugt erstreckt sich in einer als Mutter gestalteten Befestigungselement-Vorrichtung in eine Stirnfläche des Innenteils eine rotationssymmetrische Vertiefung und in die andere Stirnfläche eine ein Innengewinde tragende Vertiefung, wobei das Innenteil mit seinem diese andere Stirnfläche aufweisenden Ende aus dem Außenteil geringfügig herausragt. Unter geringfügig ist in diesem Sinne insbesondere zu verstehen, daß die jeweiligen Enden der Außenteils und des Innenteils derart beabstandet sind, daß sichergestellt ist, das eine Relativbeweglichkeit zwischen dem Außenteil und dem Innenteil auch dann noch gegeben ist, wenn diese andere Stirnfläche von einem Umbauteil belastet wird bzw. an einem Umbauteil anliegt. Bevorzugt ist dieser Abstand derart gestaltet, daß sichergestellt ist, daß beim Verschrauben der Mutter gegen eine ebene Fläche nur diese andere Stirnfläche von dieser ebenen Fläche belastet wird, und nicht die dieser ebenen Fläche zugewandte Stirnfläche des Außenteils. Ein geringer Abstand ist insbesondere kleiner als 5 mm oder 4 mm oder 3 mm oder 2 mm und größer als 0,5 mm oder als 1 mm oder als 2 mm. Durch diese Maßangaben soll die Erfindung nicht beschränkt werden.

Vorzugsweise ist die Befestigungselement-Vorrichtung als Schraube mit Schraubenkopf und Schraubenschaft gestaltet, wobei der Schraubenkopf dem Innenteil zugeordnet ist und zumindest teilweise von einem beweglich, insbesondere drehbeweglich, angeordneten Außenteil ummantelt ist.

Das drehbeweglich angeordnete Außenteil kann sich, in axialer Richtung, im wesentlichen über die gesamte Länge des Schraubenkopfes erstrecken, und gegebenenfalls länger sein als der Schraubenkopf, oder nur über einen Teil der Länge des Schraubenkopfes. Die Gesamtlänge des Außenteils kann, in axialer Richtung größer, gleich oder kleiner als die Gesamtlänge des Schraubenkopfes sein. Der Schraubenkopf kann mit seinem dem Schraubenschaft zugewandten Ende aus dem Außenteil herausragen, und zwar insbesondere geringfügig, oder im Außenteil versenkt sein. "Geringfügig" bezieht sich in diesem Sinne insbesondere auf Abmaße bzw. Gestaltungen, die in bezug auf die Mutter genannt wurden. Das Außenteil kann auch, in axialer Richtung, an beiden Enden des Schraubenkopfes über diesen hinausragen oder nur an einem Ende oder an keinem dieser Enden. Auch andere Relativanordnungen von Schraubenkopf und Außenteil sind bevorzugt.

Besonders bevorzugt schließt das Außenteil mit dem Schraubenkopf in wenigstens einer oder beiden Orientierungen der axialen Richtung bündig ab. Vorzugsweise schließt das Außenteil an einem mit rotationssymmetrischer Vertiefung versehenen Ende des Schraubenkopfes bündig ab, wobei das andere Ende des Schraubenkopfes aus dem Außenteil geringfügig herausragt.

Bevorzugt ist die Außenoberfläche und/oder die Innenoberfläche des Innenteils, also insbesondere des Innenteils der Mutter bzw. des Schraubenkopfes, rotationssymmetrisch gestaltet, und zwar zumindest in dem Bereich in dem das Außenteil das Innenteil bzw. das Innenteil der Mutter bzw. den Schraubenkopf ummantelt.

Vorzugsweise ist die Außenoberfläche des Außenteils rotationssymmetrisch gestaltet ist. Die Außenoberfläche und/oder die Innenoberfläche und/oder die Stirnflächen des Außenteils sind mit oder ohne Profilierungen versehen.

Bevorzugt ist das Innenteil gegenüber dem Außenteil in axialer Richtung gesichert ist. Insbesondere ist vorgesehen, daß die Außenoberfläche des Innenteils sowie die Innenoberfläche des Außenteils jeweils eine sich in Umfangsrichtung erstreckende, geschlossene Nut aufweist, wobei sich in diese jeweiligen Nuten ein Sicherungselement erstreckt. Dieses Sicherungselement ist bevorzugt ein Sicherungsring (Sprengring). Besonders bevorzugt weist dieses Sicherungselement eine Federwirkung auf, so daß es bei der Montage im wesentlichen vollständig in eine der Nuten erstreckt und dann, wenn diese _Nuten radial benachbart sind, sich entlastet und in beide Nuten erstreckt. Vorzugsweise sind das Außenteil und das Innenteil nach der Montage nicht mehr demontierbar bzw. nicht mehr zerstörungsfrei demontierbar, wobei sich dieses "zerstörungsfrei" gegebenenfalls auch auf ein Sicherungselement bezieht.

Vorzugsweise ist das Außenteil als Gleitelement gestaltet. Das Außenteil ist insbesondere ein Gleitring oder eine Gleitbuchse. Das Außenteil kann im wesentlichen zylindrisch gestaltet sein oder in Form eine eines Topfes, welcher im Bodenbereich eine zentrale Durchgangsöffnung aufweist, oder auf sonstige Weise.

Bevorzugt erstreckt sich das sich Außenteil radial außerhalb um eine rotationssymmetrische Vertiefung, die im Innenteil angeordnet ist.

Besonders bevorzugt ist das Außenteil im wesentlichen starr gestaltet ist, und zwar insbesondere derart, daß es sich bei einer Drehmomentenbelastung um seine zentrale Achse und/oder bei radialer Belastung im wesentlichen nicht deformiert.

Vorzugsweise weist das Innenteil auf seiner Außenoberfläche einen Bereich mit vermindertem Außendurchmesser auf, in welchen sich daß Außenteil erstreckt. Dieser Bereich mit vermindertem Durchmesser ist bei einer als Schraube gestalteten Befestigungselement-Vorrichtung insbesondere in einem axialen Endbereich des Schraubenkopfes angeordnet, wie einem axialen Endbereich, in welchem eine rotationssymmetrischen Vertiefung vorgesehen ist, oder wie einem axialen Endbereich, welcher einem Schraubenschaft zugewandt ist. Bevorzugt weist das Außenteil einen sich radial erstreckenden Ringflansch auf, welcher in einen derartigen Bereich mit vermindertem Durchmesser eingreift. In entsprechender Weise kann auch eine als Mutter gestaltete Befestigungselement-Vorrichtung, insbesondere in einem ihrer axialen Endbereiche, auf der Außenoberfläche des Innenteils einen Bereich mit vermindertem Durchmesser aufweisen, in welchen in vorbeschriebener Weise ein Flansch des Außenteils eingreift. Dieser Bereich ist bevorzugt an einem einer rotationssymmetrischen Vertiefung zugewandten Ende des Innenteils oder an dem diesem Ende in axialer Richtung abgewandten Ende vorgesehen.

Erfindungsgemäß ist insbesondere eine Befestigungselement-Vorrichtung, wie Schraube oder Mutter oder dergleichen, vorgesehen, welche eine erste Baueinheit mit einer im wesentlichen rotationssymmetrischen Vertiefung aufweist.

Im Sinne der vorliegenden Erfindung kann eine Vorrichtung welche, eine Baueinheit, insbesondere erste Baueinheit aufweist, diese Baueinheit sein oder diese Baueinheit als Bestandteil aufweisen. Die Baueinheit kann einstückig oder mehrstückig gestaltet sein. Die Baueinheit kann insbesondere ein einzelnes Teil oder eine Anordnung mehrerer Teile oder ein Bereich eines oder mehrerer Teile sein.

Die rotationssymmetrische Vertiefung ist im wesentlichen konzentrisch zu einer Längsachse, wie Drehachse, der Befestigungselement-Vorrichtung angeordnet und dient vorzugsweise dazu, daß zwischen der rotationssymmetrischen (Innen-)Mantelfläche (24) dieser Vertiefung (22) und einem in diese Vertiefung (22) einführbaren Bauteil (40) eine Kraft oder ein Drehmoment übertragen werden kann, welche bzw. welches ein Verschrauben wenigstens eines Gewindes dieser Befestigungselement-Vorrichtung in einem Gegengewinde eines weiteren Bauteils (180) ermöglicht. Bevorzugt kann dieses Verschrauben bzw. diese Montage oder Demontage mittels einer erfindungsgemäßen Werkzeugadapter-Vorrichtung bewirkt werden.

Vorzugsweise ist die erste Baueinheit einer erfindungsgemäßen Sicherheitsvorrichtung gemäß Anspruch 1 und/oder die Stopfen-Vorrichtung gemäß Anspruch 2 und/oder die Befestigungselement-Vorrichtung gemäß Anspruch 3 und/oder die Befestigungselement-Vorrichtung der Verschlußvorrichtung gemäß Anspruch 5 mit einer derartigen rotationssymmetrischen Vertiefung versehen, wobei diese jeweiligen Vorrichtungen bzw. diese Vertiefung gegebenenfalls gemäß bevorzugten Gestaltungsformen dieser Erfindung gestaltet sind.

Die Aufgabe wird ferner gelöst durch eine Vorrichtung gemäß Anspruch 5.

Erfindungsgemäß ist insbesondere eine Verschlußvorrichtung für Montageteile, wie Schrauben bzw. Schraubenköpfe oder Muttern oder dergleichen vorgesehen. Das Montageteil kann gegebenenfalls auch ein elektrischer Stecker oder ein sonstiges Bauelement sein.

Erfindungsgemäß weist diese Verschlußvorrichtung insbesondere ein Überwurfelement auf sowie ein Überwurfschloß. Zum Schließen bzw. Verschließen und Öffnen der Verschlußvorrichtung ist ferner ein Koppelmechanismus vorgesehen, welcher insbesondere separat vom Überwurfelement und vom Überwurfschloß vorgesehen ist oder zumindest teilweise Bestandteil des Überwurfelements oder des Überwurfschlosses ist.

Insbesondere ist vorgesehen, daß mittels des Koppelmechanismus das Überwurfschloß und das Überwurfelement miteinander lösbar gekoppelt werden können. Besonders bevorzugt kann dieses Koppeln und/oder Lösen nicht mit Standardwerkzeugen, wie Rohrzange oder Schraubendreher oder Schraubenschlüssel oder dergleichen, und nicht werkzeugfrei bewirkt werden.

Das Überwurfelement ist bevorzugt bügelförmig oder hufeisenförmig gestaltet.

Bei verschlossener bzw. gekoppelter Verschlußvorrichtung wird das Montageteil bzw. das zu sichernde Teil wenigstens teilweise abgedeckt. Hierbei ist insbesondere dieses zu sichernde Teil, welches auch als Montageteil oder als zu fangendes Teil bezeichnet wird, in bzw. von der Verschlußvorrichtung gefangen. Unter "gefangen" ist im Sinne der vorliegenden Erfindung insbesondere zu verstehen, daß die Relativbeweglichkeit gegenüber der Verschlußvorrichtung zumindest beschränkt ist. Dieses "Gefangensein" ist vorzugsweise derart gestaltet, daß ein Schraubenkopf oder eine Mutter oder ein Schraubverbindungselement für Rohrverbindungen, welche insbesondere mit einem (Gewinde)schaft bzw. Rohren verbunden bzw. verschraubt ist, in Richtung der Rohr- bzw. Schrauben- bzw. Mutterachse nicht oder nur beschränkt bewegt werden kann und Bereiche zum Angreifen für eines konventionellen Werkzeug, wie Schraubenkopf oder dergleichen, nicht für ein derartiges Werkzeug erreichbar bzw. greifbar sind.

Vorzugsweise können das Überwurfschloß und der Überwurfbügel mittels einer erfindungsgemäßen Befestigungselement-Vorrichtung lösbar gekoppelt werden, wobei insbesondere vorgesehen ist, daß die Kopplung mittels eines konventionellen Werkzeugs werden erzeugt noch gelöst werden kann.

Vorzugsweise werden das Überwurfelement und das Überwurfschloß zur Kopplung ineinandergesteckt.

Das Überwurfelement bzw. der Überwurfbügel kann bevorzugt gegenüber dem Überwurfschloß fixiert werden. Hierzu sind der Überwurfbügel sowie das Überwurfschloß vorzugsweise jeweils mit zwei Bohrungen versehen, wobei sich durch diese vier Bohrungen im ineinandergesteckten Zustand des Überwurfelements und und des Überwurfschlosses eine Schraube oder dergleichen erstrecken kann.

Vorzugsweise weist das Überwurfelement und/oder das Überwurfschloß jeweils wenigstens ein eine mit wenigstens einer Ausnehmung versehene Abdeckung auf, wobei sich durch diese Ausnehmungen ein zum zu sichernden Bauteil erstreckender Schaft oder Rohr erstrecken kann und wobei zumindest mittels dieser Abdekkungen das zu sichernde Bauteil befangen bzw. teilweise eingeschlossen wird.

Bevorzugt ist der Abstand zwischen zwischen einer oberen und einer unteren Abdeckung weniger als doppel so groß ist, wie die Dicke eines zu fangenden Schraubenkopfs bzw. einer zu fangenden Mutter.

Bevorzugt weist der Koppelmechanismus, mittels welchem das Überwurfelement und das Überwurfschloß lösbar gekoppelt werden kann, wenigstens eine Schloßschraube auf. Besonders bevorzugt ist zur Sicherung bzw. zur Kopplung am schraubenkopfabgewandten Ende dieser Schloßschraube eine erfindungsgemäße Mutter mit rotationssymmetrischer Vertiefung und/oder mit Innen- und Außenteil verschraubt, wobei zwischen dieser Mutter und dem Schraubenkopf der Schloßschraube im gekoppelten Zustand die Einheit aus ineinandergestecktem Überwurfelement und Überwurfschloß angeordnet ist.

Die Aufgabe wird ferner gelöst durch einen Werkzeugadapter, welcher eine zweite Baueinheit aufweist oder aus einer zweiten Baueinheit besteht, die ein Verbindungsteil mit wenigstens einem Reibkörper aufweist, welches in eine rotationssymmetrische Vertiefung eingeschoben werden kann und mit einer Wandung dieser rotationssymmetrischen Vertiefung derart reibschlüssig koppelbar ist, daß zwischen den Wandungen der rotationssymmetrischen Vertiefung und der zweiten Baueinheit eine Kraft oder ein Drehmoment übertragen werden kann, und zwar mittels einer Anpreßeinrichtung des Verbindungsteils, welche einen oder mehrere Reibkörper gegen eine Fläche der rotationssymmetrischen Vertiefung pressen kann. Die zweite Baueinheit bzw. die Anpreßeinrichtung sowie die Reibkörper sind insbesondere derart gestaltet, daß der Reibschluß zwischen der zweiten Baueinheit und der rotationssymmetrischen Vertiefung, welcher eine Kraft- oder Drehmomentübertragung ermöglicht, erzeugt und gelöst werden kann.

Ein Werkzeugadapter ist im Sinne der vorliegenden Erfindung insbesondere ein Adapter, welcher zur Kraft- oder Momentenübertragung zwischen einem Werkzeug, wie Schraubendreher, Schraubenschlüssel, Zange oder dergleichen, und einem zu montierenden Bauteil, wie Stopfen oder dergleichen, angeordnet werden kann, oder ein Werkzeug selbst. Insbesondere kann ein Werkzeugadapter selbst als Werkzeug gestaltet sein. Insbesondere weist ein Adapter zur Übertragung eines Drehmoments auf ein zu montierendes Bauteil Hebelarme, Griffeinrichtungen oder dergleichen auf, welche ermöglichen, daß ein zur Montage erforderliches Drehmoment manuell erzeugt werden kann.

Vorzugsweise ist die erste und/oder die zweite Baueinheit drehbeweglich um eine Drehachse angeordnet, wobei die Drehachsen der ersten Baueinheit und der zweiten Baueinheit identisch sind.

Besonders bevorzugt ist die rotationssymmetrische Vertiefung konzentrisch zur Drehachse der ersten und/oder der zweiten Baueinheit angeordnet.

Vorzugsweise weist die rotationssymmetrische Vertiefung eine im wesentlichen unprofilierte (Innen-)Mantelfläche auf.

Bevorzugt verjüngt sich die (Innen-)Mantelfläche der rotationssymmetrischen Vertiefung der ersten Baueinheit in Tiefenrichtung. Besonders bevorzugt ist diese (Innen-)Mantelfläche konisch gestaltet.

Bevorzugt weist die rotationssymmetrische Vertiefung der ersten Baueinheit eine Bodenfläche auf, welche unprofiliert gestaltet ist.

Die Bodenfläche der rotationssymmetrischen Vertiefung der ersten Baueinheit ist vorzugsweise kantenfrei, besonders bevorzugt eben oder abgerundet, wie kugelsegmentartig oder halbkugelförmig, gestaltet. Besonders bevorzugt sind die Übergänge zwischen der Bodenfläche und der (Innen-)Mantelfläche der rotationssymmetrischen Vertiefung kantenfrei gestaltet. Gegebenenfalls ist in diesem Übergangsbereich eine Kante vorgesehen. Besonders bevorzugt ist die Bodenfläche eben gestaltet, und zwar derart, daß sich diese ebene Fläche senkrecht zur Längsachse der rotationssymmetrischen Öffnung erstreckt. Besonders bevorzugt ist die Bodenfläche der rotationssymmetrischen Vertiefung der ersten Baueinheit frei von Vorsprüngen, und zwar insbesondere frei von Vorsprüngen, welche in Richtung der Längsachse der rotationssymmetrischen Vertiefung hervorstehen. Besonders bevorzugt weist die Bodenfläche einen Punkt oder eine Linie oder eine Fläche auf, von welcher sich der verbleibende Teil der Bodenfläche monoton oder streng monoton steigend oder fallend in Achsrichtung radial nach außen erstreckt. Gegebenenfalls ist die Bodenfläche kegel- oder kegelstumpfförmig gestaltet.

Vorzugsweise erstreckt sich die rotationssymmetrische Vertiefung in eine Stirnfläche der ersten Baueinheit, wobei diese Stirnfläche im wesentlichen unprofiliert, und insbesondere eben, gestaltet ist. Besonders bevorzugt wird die Stirnfläche radial innen durch eine kreisförmige Öffnung, welche die rotationssymmetrische Öffnung begrenzt, begrenzt. Besonders bevorzugt wird die Stirnfläche radial außen durch eine im wesentlichen rotationssymmetrische, insbesondere kreisförmige Kontur begrenzt.

Besonders bevorzugt weist die erste Baueinheit ein Gewinde auf, mittels welchem diese Baueinheit in einem Gegengewinde montiert werden kann. Dieses Gewinde ist als Innengewinde oder als Außengewinde gestaltet. Das Gewinde ist vorzugsweise in axialer Richtung versetzt zur rotationssymmetrischen Vertiefung angeordnet oder zumindest teilweise radial außerhalb der rotationssymmetrischen Vertiefung. Besonders bevorzugt dient dieses Gewinde dazu, die erste Baueinheit an einer Rohröffnung oder einer sonstigen Einrichtung zu montieren, um eine Öffnung dieser Einrichtung zu verschließen. Besonders bevorzugt kann mittels dieses Gewindes und der ersten Baueinheit ein Schloß, wie Türschloß, oder eine Rohröffnung oder dergleichen abgedeckt werden.

Vorzugsweise sind der oder die Reibkörper der zweiten Baueinheit in einer Reibkörper-Aufnahmeeinrichtung angeordnet oder gelagert. Vorzugsweise sind diese Reibkörper derart gelagert, daß sie bezüglich der zweiten Baueinheit in radialer Richtung zumindest teilweise beweglich angeordnet sind.

Unter der Radialbeweglichkeit der Reibkörper ist im Sinne der vorliegenden Erfindung insbesondere zu verstehen, daß die Reibkörper nur in radialer Richtung beweglich angeordnet sind, oder, daß sie zumindest auch in radialer Richtung beweglich angeordnet sind. Bevorzugt sind die Reibkörper beweglich in einer Richtung angeordnet, welche mit der zur zentralen Längsachse radialen Richtung einen Winkel einschließt, welcher kleiner als 20°, besonders bevorzugt kleiner als 15° ist, besonders bevorzugt kleiner als 10° ist, und welche mit der zur zentralen Längsachse axialen Richtung einen Winkel einschließt, welcher zwischen 70° und 90°, bevorzugt zwischen 75° und 85°, ist.

Besonders bevorzugt sind Führungseinrichtungen vorgesehen, welche den oder die Reibkörper in radialer Richtung, und gegebenenfalls in Umfangsrichtung und/oder in Axialrichtung führen. Bevorzugt werden die Reibkörper sowohl in Umfangsrichtung als auch in Radialrichtung geführt oder in radialer Richtung geführt, wobei die Umfangsbeweglichkeit bezüglich der Reibkörper-Aufnahmeeinrichtung im wesentlichen beschränkt oder verhindert wird.

Bevorzugt sind die Reibkörper in der Reibkörper-Aufnahmeeinrichtung derart angeordnet, daß sie radial nach außen aus der Reibkörper-Aufnahmeeinrichtung zumindest teilweise herausragen und in dieser radialen Richtung unterschiedliche Positionen einnehmen können.

Vorzugsweise sind die Reibkörper innerhalb der Reibkörper-Aufnahmeeinrichtung gegen radiales Herausfallen, und insbesondere ein radial nach außen gerichtetes Herausfallen, gesichert. Dies ist vorzugsweise derart gestaltet, daß sich die Reibkörper, bezüglich der Reibkörper-Aufnahmeeinrichtung bzw. der zweiten Baueinheit, nach radial außen verjüngen und/oder eine Anschlagsfläche aufweisen, welche derart gestaltet ist, daß die Reibkörper sich nur um eine vorbestimmte Strecke durch Öffnungen der Reibkörper-Aufnahmeeinrichtung nach außen bewegen können und bei diesen vorbestimmten Positionen gegen die Reibkörper-Aufnahmeeinrichtung anschlagen, so daß eine weitere, radial nach außen gerichtete Bewegung der Reibkörper verhindert wird. Vorzugsweise weist die Reibkörper-Aufnahmeeinrichtung eine sich verjüngende Außenkontur auf oder ist im wesentlichen zylindrisch gestaltet und weist Öffnungen auf, durch welche sich die Reibkörper zumindest teilweise radial nach außen erstrecken können.

Besonders bevorzugt sind die Reibkörper bezüglich der zweiten Baueinheit bzw. bezüglich der Reibkörper-Aufnahmeeinrichtung umfangsmäßig angeordnet. Bevorzugt sind die Reibkörper umfangsmäßig gleichmäßig verteilt angeordnet.

Vorzugsweise sind die Reibkörper als Wälzkörper gestaltet, und zwar insbesondere als Walzen, Zylinder, Kegel oder Kegelstumpfelemente, Kugeln, oder als Bauteile, welche zumindest teilweise eine abgerundete Oberfläche aufweisen, wobei sich diese abgerundete Oberfläche, bezüglich der zweiten Baueinheit, radial nach außen erstreckt. Die Erfindung wird im wesentlichen anhand von als Walzen gestalteten Reibkörpern beschrieben, wodurch die Erfindung nicht eingeschränkt werden soll. Auch die Verwendung anders gestalteter Reibkörper ist bevorzugt.

Bevorzugt sind mehrere Reibkörper in axialer Richtung der zweiten Baueinheit versetzt angeordnet.

Insbesondere sind diese Reibkörper, bezüglich der zweiten Baueinheit, bei der gleichen Umfangsposition in axialer Richtung versetzt angeordnet.

Besonders bevorzugt sind zwei oder mehr Kugeln jeweils bei einer vorbestimmten Umfangsposition, bezüglich der zweiten Baueinheit, in axialer Richtung versetzt zueinander angeordnet.

Bevorzugt sind bei verschiedenen Umfangspositionen jeweils mehrere, derart axial versetzt zueinander angeordnete, Reibkörper vorgesehen.

Vorzugsweise sind die bezüglich der zweiten Baueinheit radial äußeren Bereiche der Reibkörper derart gestaltet, daß sie im wesentlichen auf einer vorbestimmten fiktiven zylindrischen oder konischen Fläche angeordnet sind, wobei besonders bevorzugt diese Fläche im wesentlichen der (Innen-)Mantelfläche der Vertiefung der ersten Baueinheit entspricht.

Dies gilt insbesondere, wenn die Reibkörper mittels der Anpreßeinrichtung in Umfangsrichtung belastet werden.

Bevorzugt weist die zweite Baueinheit mehrere sich in Längsrichtung erstreckende Reibkörper, wie Walzen oder konische Elemente oder dergleichen auf, welche umfangsmäßig bezüglich der zweiten Baueinheit angeordnet sind und deren Achse unter einem Winkel zur zentralen Achse der zweiten Baueinheit verläuft.

Vorzugsweise sind die Reibkörper und/oder die Reibkörper-Aufnahmeeinrichtung derart angeordnet und/oder gestaltet, daß sich ihre Außenkontur bzw. die Außenkontur der Gesamtheit der Reibkörper in Richtung der zentralen Achse der zweiten Baueinheit verjüngt, und zwar insbesondere in Richtung eines Endes, welches vorzugsweise dazu bestimmt ist, in eine im wesentlichen rotationssymmetrische Vertiefung einer ersten Baueinheit eingeführt zu werden.

Bevorzugt weist die Anpreßeinrichtung Kontaktflächen auf, welche relativbeweglich zu den Reibkörpern angeordnet sind und bei einer Relativbewegung zu diesen Reibkörpern bewirken können, daß die Reibkörper, welche gegebenenfalls durch entsprechende Führungseinrichtungen geführt werden, bezüglich der zweiten Baueinheit in radialer Richtung bewegt und/oder belastet werden. Vorzugsweise wird eine derartige Bewegung oder Belastung der Reibkörper in radialer Richtung erzeugt, wenn diese Kontaktflächen der Anpreßeinrichtung, bzw. ihre Gesamtheit, bezüglich einer zentralen Längsachse der zweiten Baueinheit verdreht werden. Besonders bevorzugt wandert dabei der Kontaktbereich zwischen den Kontaktflächen und den Reibkörpern radial nach außen.

Vorzugsweise ist wenigstens eine dieser Kontaktflächen bezüglich einer Mittellage, welche ein Wälzkörper gegebenenfalls bezüglich der Umfangsrichtung an dieser Kontaktfläche einnehmen kann, symmetrisch oder asymmetrisch gestaltet.

Vorzugsweise sind die Kontaktflächen und/oder die Anpreßeinrichtung und/oder die Reibkörper und/oder die von den Reibkörpern belastbare Fläche der rotationssymmetrischen Vertiefung der ersten Baueinheit derart gestaltet, daß eine Relativbewegung der Kontaktflächen, insbesondere eine Drehbewegung der Kontaktflächen um eine Längsachse der zweiten Baueinheit, bewirkt, daß die Reibkörper von dieser jeweiligen Reibfläche zumindest auch radial nach außen belastet bzw. bewegt werden und gegen eine Fläche, insbesondere eine (Innen-)Mantelfläche, der rotationssymmetrischen Vertiefung der ersten Baueinheit gepreßt werden.

Die Kontaktflächen sind bevorzugt abgerundet oder geschwungen oder eben gestaltet.

Unterschiedliche umfangsmäßig sich an der Anpreßeinrichtung oder der zweiten Baueinheit erstreckende Kontaktflächen grenzen aneinander an oder sind beabstandet. Aneinandergrenzende Kontaktflächen weisen, bezüglich der Umfangsrichtung der zweiten Baueinheit, einen stetigen oder einen unstetigen Übergang auf.

Besonders bevorzugt erstrecken sich die Kontaktflächen bezüglich einer Längsachse der Anpreßeinrichtung oder der zweiten Baueinheit unter einem Winkel in Längsrichtung.

Vorzugsweise sind die Kontaktflächen derart gestaltet, daß der Querschnitt durch mehrere bzw. durch die Gesamtheit dieser Kontaktflächen eine mehreckige Außenkontur aufweist.

bevorzugt sind die Kontaktflächen an einem Bauteil der Anpreßeinrichtung derart angeordnet, daß dieses Bauteil, zumindest bezüglich seiner Außenkontur, pyramiden- oder pyramidenstumpf- oder tetraeder- oder tetraederstumpfförmig gestaltet ist, wobei bei pyramiden- oder pyramidenstumpfförmiger Gestaltung die Anzahl der Seitenflächen grundsätzlich beliebig ist und vorzugsweise derart ist, daß die Anzahl der Seitenflächen im wesentlichen mit der Anzahl der Reibkörper, welche in Umfangsrichtung auf unterschiedlichen Positionen angeordnet sind, übereinstimmt.

Die Reibkörper sind vorzugsweise derart angeordnet, daß sie in einer ersten Stellung eines Bauteils, welches die Kontaktflächen aufweist, nicht oder um eine erste Länge aus der Reibkörper-Aufnahmeeinrichtung radial nach außen hervorstehen und in einer zweiten Stellung weiter radial nach außen hervorstehen als in der ersten Stellung.

Die Kontaktflächen der Anpreßeinrichtung sind vorzugsweise jeweils einem oder mehreren Reibkörpern zugeordnet. Vorzugsweise ist der Abstand der Punkte dieser Kontaktfläche von einer zentralen Längsachse der Anpreßeinrichtung und/oder der zweiten Baueinheit bei einer vorbestimmten axialen Richtung in Umfangsrichtung unterschiedlich, so daß insbesondere bewirkt werden kann, daß eine Verdrehung des diese Kontaktflächen tragenden Körpers in Umfangsrichtung bewirkt, daß die Reibkörper zumindest radial nach außen gerichtet bewegt und/oder belastet werden.

Besonders bevorzugt sind die Kontaktflächen zumindest teilweise radial innerhalb der Reibkörper angeordnet.

Bevorzugt sind die Kontaktflächen eben gestaltet und erstrecken sich teilweise radial innerhalb des der jeweiligen Kontaktfläche zugeordneten Reibkörpers und teilweise, in Umfangsrichtung gesehen, zwischen wenigstens zwei verschiedenen Reibkörpern.

Besonders bevorzugt weist die zweite Baueinheit wenigstens einen Aufnahmebereich zur Aufnahme eines Werkzeugs auf. Dieser Aufnahmebereich ist vorzugsweise derart gestaltet, daß mittels einer Zange oder eines Schraubendrehers oder eines Schraubenschlüssels oder eines sonstigen Werkzeuges, wie Standardwerkzeug, ein Drehmoment auf die zweite Baueinheit um deren Längsachse erzeugt werden kann, wobei ein Formschluß zwischen dem Werkzeug und dieser zweiten Baueinheit gegeben ist.

Vorzugsweise ist die zweite Baueinheit und/oder das Zusammenwirken zwischen der ersten und der zweiten Baueinheit derart gestaltet, daß die zweite Baueinheit nur in einer ersten Drehrichtung ein Drehmoment übertragen kann, und zwar insbesondere auf die erste Baueinheit. Dieses Drehmoment wird insbesondere über Reibschluß zwischen den Reibkörpern der zweiten Baueinheit und einer Fläche der rotationssymmetrischen Vertiefung der ersten Baueinheit übertragen. In der zweiten, der ersten entgegengesetzten Drehrichtung kann kein Drehmoment von der zweiten Baueinheit übertragen werden übertragen kann, und zwar insbesondere nicht über die Reibkörper.

Bevorzugt wirken die Anpreßeinrichtung und die Reibkörper derart zusammen, daß die Reibkörper radial nach außen gedrückt werden, wenn die zweite Baueinheit in der ersten Drehrichtung belastet wird, wobei die Reibkörper im wesentlichen nicht oder zumindest nicht weiter oder nicht wesentlich radial nach außen gedrückt werden, wenn die zweite Baueinheit (40) in der zweiten, der ersten entgegengesetzten, Drehrichtung belastet wird. Unter "nicht wesentlich" ist in diesem Sinne insbesondere zu verstehen, daß die Reibkörper zumindest nicht derart nach außen gedrückt werden, daß sie ein Drehmoment auf die erste Baueinheit übertragen können. Bevorzugt werden die Reibkörper bei einer Belastung der zweiten Baueinheit in der ersten Drehrichtung aus dem Käfig, welcher diese Reibkörper aufnimmt, in radialer Richtung nach außen gedrückt oder weiter in radialer Richtung aus dem Käfig nach außen gedrückt. Bei einer Belastung der zweiten Baueinheit in der zweiten, der ersten entgegengesetzten, Drehrichtung werden die Reibkörper vorzugsweise nicht oder nicht weiter in radialer Richtung aus dem Käfig herausgedrückt.

Vorzugsweise sind in den Kontaktflächen oder in sich an diese Kontaktflächen anschließenden Flächen Vertiefungen vorgesehen, welcher radial weiter innen angeordnet sind als die Kontaktflächenbereiche, welche die Reibkörper gegen die (Innen-)Mantelfläche der rotationssymmetrischen Vertiefung der ersten Baueinheit pressen können. Anstelle der Vertiefungen können auch Kontaktflächenbereiche bzw. Flächen vorgesehen sein, welche derart gestaltet sind, daß sie, ohne als Vertiefung gestaltet zu sein, radial weiter innen angeordnet sind als die Kontaktflächenbereiche, welche bewirken können, daß die Reibkörper gegen die (Innen-)Mantelfläche der rotationssymmetrischen Vertiefung der ersten Baueinheit gepreßt werden. Bei einer Belastung der zweiten Baueinheit in der zweiten Drehrichtung bewegen sich die Reibkörper bevorzugt in diese Bereich, so daß die Reibkörper durchrutschen und über diese Reibkörper kein Drehmoment auf die erste Baueinheit übertragen werden kann. In der Gegendrehrichtung wirken die Kontaktflächen, die Reibkörper und die (Innen)Mantelflächen der rotationssymmetrischen Vertiefung derart zusammen, daß über Reibschluß ein Drehmoment zwischen der ersten und der zweiten Baueinheit um ihre zentrale Achse übertragen werden kann.

Das Durchrutschen einerseits und das Anpressen andererseits wird insbesondere über eine asymmetrische Gestaltung der Kontaktflächen bewirkt, und zwar insbesondere in Bezug auf die nicht-verdrehte Nullage.

Zwischen den Bereichen oder Kontaktflächenbereichen, welche bei einer Belastung der zweiten Baueinheit in der zweiten Drehrichtung ein Durchrutschen bewirken, und den Kontaktflächenbereichen, welche bei einer Belastung der zweiten Baueinheit in der ersten, der zweiten entgegengesetzten, Drehrichtung bewirken, daß die Reibkörper gegen die (Innen-)Mantelflächen der rotationssymmetrischen Vertiefung der ersten Baueinheit gepreßt werden, sind vorzugsweise jeweils Flächenbereiche bzw. Kontaktflächenbereiche vorgesehen, welche die Reibkörper in einer im wesentlichen nicht-verdrehten Relativstellung bzw. Nullage kontaktieren.

Bevorzugt ist eine erfindungsgemäße Vorrichtung derart gestaltet, daß sich die (Innen-)Mantelfläche der rotationssymmetrischen Vertiefung der zweiten Baueinheit in Tiefenrichtung der rotationssymmetrischen Vertiefung verjüngt.

Bevorzugt ist eine erfindungsgemäße Vorrichtung derart gestaltet, daß sich die rotationssymmetrische Vertiefung in eine im wesentlichen unprofilierte, insbesondere rotationssymmetrische, Stirnfläche erstreckt.

Bevorzugt ist eine erfindungsgemäße Vorrichtung derart gestaltet, daß der wenigstens eine Reibkörper in einer Reibkörper-Aufnahmeeinrichtung angeordnet ist, und zwar insbesondere radial beweglich.

Bevorzugt ist eine erfindungsgemäße Vorrichtung derart gestaltet, daß die Reibkörper in radialer Richtung unter vorbestimmten Gegebenheiten aus der Reibkörper-Aufnahmeeinrichtung herausragen.

Bevorzugt ist eine erfindungsgemäße Vorrichtung derart gestaltet, daß die Reibkörper in radialer Richtung gegen Herausfallen gesichert sind, und zwar insbesondere gegen ein radial nach außen gerichtetes Herausfallen aus der Reibkörper-Aufnahmeeinrichtung.

Bevorzugt ist eine erfindungsgemäße Vorrichtung derart gestaltet, daß die Reibkörper in der Reibkörper-Aufnahmeeinrichtung oder der zweiten Baueinheit umfangsmäßig angeordnet sind.

Bevorzugt ist eine erfindungsgemäße Vorrichtung derart gestaltet, daß wenigstens zwei unterschiedliche Reibkörper in axialer Richtung der Reibkörper-Aufnahmeeinrichtung oder in axialer Richtung der zweiten Baueinheit versetzt angeordnet sind.

Bevorzugt ist eine erfindungsgemäße Vorrichtung derart gestaltet, daß die Reibkörper und/oder die Reibkörper-Aufnahmeeinrichtung derart angeordnet und/oder gestaltet ist, daß sich die Außenkontur der Reibkörper oder der Gesamtheit der Reibkörper oder der Reibkörper-Aufnahmeeinrichtung in axialer Richtung der Reibkörper-Aufnahmeeinrichtung oder der zweiten Baueinheit verjüngt.

Bevorzugt ist eine erfindungsgemäße Vorrichtung derart gestaltet, daß die Anpreßeinrichtung Kontaktflächen aufweist, welche relativbeweglich zu den Reibkörpern angeordnet sind und bei einer Relativbewegung die Reibkörper derart belasten können, daß die Radialposition der Reibkörper und/oder die Belastung der Reibkörper in radialer Umfangsrichtung verändert wird.

Bevorzugt ist eine erfindungsgemäße Vorrichtung derart gestaltet, daß eine Drehbewegung der Anpreßeinrichtung und/oder der Kontaktflächen der Anpreßeinrichtung um eine zentrale Längsachse der zweiten Baueinheit unter vorbestimmten Gegebenheiten bewirkt, daß die Reibkörper in einer radial nach außen gerichteten Richtung belastet werden.

Bevorzugt ist eine erfindungsgemäße Vorrichtung derart gestaltet, daß die zweite Baueinheit wenigstens einen Aufnahmebereich zur Aufnahme eines Werkzeugs aufweist, über welchen eine Kraft oder ein Moment zwischen dem Werkzeug und der zweiten Baueinheit übertragen werden kann.

Bevorzugt ist eine erfindungsgemäße Vorrichtung derart gestaltet, daß die zweite Baueinheit derart gestaltet ist, daß sie in einer ersten Drehrichtung ein Drehmoment übertragen kann und in einer zweiten, der ersten entgegengesetzten Drehrichtung kein Drehmoment übertragen kann.

Bevorzugt ist eine erfindungsgemäße Vorrichtung derart gestaltet, daß die Anpreßeinrichtung und die Reibkörper derart zusammenwirken, daß die Reibkörper radial nach außen gedrückt werden, und insbesondere aus dem Käfig in radialer Richtung zumindest weiter herausgedrückt werden, wenn die zweite Baueinheit in einer ersten Drehrichtung belastet wird, und die Reibkörper im wesentlichen nicht oder zumindest nicht weiter radial nach außen gedrückt werden, und insbesondere nicht weiter aus dem Käfig in radialer Richtung herausgedrückt werden, wenn die zweite Baueinheit in einer zweiten, der ersten Drehrichtung entgegengesetzten Drehrichtung belastet wird.

Bevorzugt ist eine erfindungsgemäße Vorrichtung derart gestaltet, daß die Anpreßeinrichtung und/oder die Kontaktflächen Vertiefungen oder radial weiter innenliegende Bereiche aufweisen, an welchen die Reibkörper anliegen oder in welche sich die Reibkörper erstrecken, wenn die zweite Baueinheit in einer zweiten Drehrichtung belastet wird, wobei die Reibkörper bei einer Belastung der zweiten Baueinheit in der ersten, der zweiten entgegengesetzten, Drehrichtung zur Drehmomentübertragung radial nach außen gedrückt werden.

Bevorzugt ist eine erfindungsgemäße Vorrichtung derart gestaltet, daß die Anpreßeinrichtung die Reibkörper gegen die (Innen)Mantelfläche der Vertiefung der ersten Baueinheit preßt, wenn die zweite Baueinheit in einer ersten Drehrichtung belastet wird, so daß zwischen der ersten und der zweiten Baueinheit über Reibschluß ein Drehmoment oder eine Kraft übertragen werden kann, und daß die Anpreßeinrichtung die Reibkörper im wesentlichen nicht gegen diese (Innen-) Mantelfläche preßt, wenn die zweite Baueinheit in einer zweiten, der ersten entgegengesetzten, Drehrichtung belastet wird, so daß zwischen der ersten und der zweiten Baueinheit im wesentlichen kein Drehmoment über Reibschluß übertragen werden kann.

Bevorzugt ist eine erfindungsgemäße Vorrichtung derart gestaltet, daß das Überwurfelement und das Überwurfschloß ineinandergesteckt werden können.

Bevorzugt ist eine erfindungsgemäße Vorrichtung derart gestaltet, daß das Überwurfelement und das Überwurfschloß jeweils an zwei gegenüberliegenden Wandungen jeweils eine Öffnung aufweist, wobei diese Öffnungen im wesentlichen fluchten und wobei die Öffnungen des Überwurfelements jeweils benachbart zu einer Öffnung des Überwurfschlosses angeordnet sind, wenn das Überwurfelement und das Überwurfschloß ineinandergesteckt sind.

Bevorzugt ist eine erfindungsgemäße Vorrichtung derart gestaltet, daß das Überwurfelement hufeisenförmig gestaltet ist.

Bevorzugt ist eine erfindungsgemäße Vorrichtung derart gestaltet, daß das Überwurfelement und das Überwurfschloß jeweils eine obere Abdeckung und eine hiermit verbundene untere Abdeckung aufweist, wobei wenigstens eine dieser Abdeckungen des Überwurfelements und/oder wenigstens eine dieser Abdeckungen des Überwurfschlosses im Randbereich eine Ausnehmung aufweist, so daß durch die Einheit aus Überwurfschloß und Überwurfelement bei geschlossenem Koppelmechanismus ein Schraubenkopf oder eine Mutter oder dergleichen derart gefangen werden kann und ein sich zu dieser Mutter oder diesem Schraubenkopf erstreckender Schaft durch wenigstens eine dieser Ausnehmungen ragen kann.

Bevorzugt ist eine erfindungsgemäße Vorrichtung derart gestaltet, daß durch die Einheit aus Überwurfelement und Überwurfschloß ein Mehrkantschraubenkopf, wie Sechskantschraubenkopf, oder eine Mehrkantmutter, wie Sechskantmutter, gefangen werden kann, wobei die Umfangskontur dieses Mehrkants, wie Sechskants, von wenigstens einer oberen und/oder wenigstens einer unteren Abdeckung bei geschlossenem Koppelmechanimus abgedeckt ist.

Bevorzugt ist eine erfindungsgemäße Vorrichtung derart gestaltet, daß durch die Einheit aus Überwurfelement und Überwurfschloß ein Mehrkantschraubenkopf, wie Sechskantschraubenkopf, oder eine Mehrkantmutter, wie Sechskantmutter, oder dergleichen gefangen werden kann, wobei dieser Mehrkant, wie Sechskant, bei geschlossenem Koppelmechanimus derart eingeschlossen ist, daß er von einem Standard-Montagewerkzeug, wie Zange oder Schraubenschlüssel oder dergleichen, nicht zur (De)Montage gegriffen werden kann.

Bevorzugt ist eine erfindungsgemäße Vorrichtung derart gestaltet, daß die Ausnehmungen in den Abdeckungen in ihrem Zusammenwirken bei geschlossenem Koppelmechanimus wenigstens eine im wesentlichen runde, obere oder untere, Öffnung definieren.

Bevorzugt ist eine erfindungsgemäße Vorrichtung derart gestaltet, daß seitliche Wandungen vorgesehen sind, welche jeweils eine obere Abdeckung und eine untere Abdeckung verbinden.

Bevorzugt ist eine erfindungsgemäße Vorrichtung derart gestaltet, daß der Abstand zwischen einer oberen und einer unteren Abdeckungen weniger als doppelt so groß ist, wie die Dicke eines zu fangenden Schraubenkopfs bzw. einer zu fangenden Mutter oder dergleichen.

Bevorzugt ist eine erfindungsgemäße Vorrichtung derart gestaltet, daß, insbesondere durch das Zusammenwirken der Ausnehmungen in den Abdeckungen mit dem Durchmesser des sich in die zu fangende Mutter erstreckenden Schafts bzw. des Schraubenschafts verhindert wird, daß die Umfangsbereiche des Schraubenkopfs bzw. der Mutter an seitliche Wandungen anstoßen, welche eine obere und eine untere Abdeckung verbinden.

Bevorzugt ist eine erfindungsgemäße Vorrichtung derart gestaltet, daß das der Koppelmechanismus wenigstens eine Schraube aufweist welche sich bei verschlossenem Koppelmechanismus durch zwei Öffnungen des Überwurfelements und durch zwei Öffnungen des Überwurfschlosses erstrecken, wobei, in Richtung der Schraubenachse gesehen, die jeweiligen Öffnungen des Überwurfelements jeweils benachbart zu einer Öffnung des Überwurfschlosses angeordnet sind.

Bevorzugt ist eine erfindungsgemäße Vorrichtung derart gestaltet, daß das der Koppelmechanismus wenigstens eine Schloßschraube aufweist.

Bevorzugt ist eine erfindungsgemäße Vorrichtung derart gestaltet, daß das der Koppelmechanismus wenigstens eine Befestigungselement-Vorrichtung gemäß einem der vorangehenden Ansprüche aufweist, welche als Mutter gestaltet ist.

Bevorzugt ist eine erfindungsgemäße Vorrichtung derart gestaltet, daß die Befestigungselement-Vorrichtung als Mutter gestaltet ist und ein Innenteil mit einem Innengewinde aufweist, wobei dieses Innenteil von einem drehbeweglich angeordneten Außenteil ummantelt ist.

Bevorzugt ist eine erfindungsgemäße Vorrichtung derart gestaltet, daß die Befestigungselement-Vorrichtung als Mutter gestaltet ist und ein Innenteil mit einem Innengewinde aufweist, wobei dieses Innenteil von einem drehbeweglich angeordneten Außenteil ummantelt ist, welches sich im über die gesamte Längsrichtung des Innenteils erstreckt.

Bevorzugt ist eine erfindungsgemäße Vorrichtung derart gestaltet, daß die Befestigungselement-Vorrichtung als Mutter gestaltet ist und ein Innenteil mit einem Innengewinde aufweist sowie eine rotationssymmetrische Vertiefung, wobei dieses Innengewinde und diese rotationssymmetrische Vertiefung im wesentlichen fluchtend und axial beabstandet angeordnet sind.

Bevorzugt ist eine erfindungsgemäße Vorrichtung derart gestaltet, daß die Befestigungselement-Vorrichtung als Mutter gestaltet ist und ein Innenteil mit einem Innengewinde aufweist sowie eine rotationssymmetrische Vertiefung, wobei dieses Innengewinde und diese rotationssymmetrische Vertiefung sich von unterschiedlichen Seiten in das Innenteil erstrecken und durch einen Zwischenflansch voneinander getrennt sind.

Bevorzugt ist eine erfindungsgemäße Vorrichtung derart gestaltet, daß die Befestigungselement-Vorrichtung als Mutter gestaltet ist und ein Innenteil mit einem Innengewinde aufweist sowie eine rotationssymmetrische Vertiefung, wobei das Innenteil an seinem von der Vertiefung abgewandten Ende aus dem Außenteil zumindest geringfügig herausragt, so daß die Relativbeweglichkeit zwischen dem Außenteil und dem Innenteil auch dann sichergestellt ist, wenn die von dieser rotationssymmetrischen Vertiefung abgewandte Stirnfläche des Innenteils im montierten Zustand von einem Umbauteil belastet wird.

Bevorzugt ist eine erfindungsgemäße Vorrichtung derart gestaltet, daß die Befestigungselement-Vorrichtung als Schraube mit Schraubenkopf und Schraubenschaft gestaltet ist, wobei der Schraubenkopf dem Innenteil zugeordnet ist und von einem drehbeweglich angeordneten Außenteil ummantelt ist.

Bevorzugt ist eine erfindungsgemäße Vorrichtung derart gestaltet, daß die Befestigungselement-Vorrichtung als Schraube gestaltet ist, wobei sich das Außenteil im wesentlichen über die gesamte Länge des Schraubenkopfes erstreckt.

Bevorzugt ist eine erfindungsgemäße Vorrichtung derart gestaltet, daß die Befestigungselement-Vorrichtung als Schraube gestaltet ist, wobei im schraubenschaftabgewandten Ende des Schraubenkopfes eine rotationssymmetrische Vertiefung vorgesehen ist und wobei das schraubenschaftzugewandte Ende des Schraubenkopfes zumindest geringfügig aus dem Außenteil herausragt, so daß die Relativbeweglichkeit zwischen dem Außenteil und dem Innenteil auch dann sichergestellt ist, wenn die schraubenschaftzugewandte Stirnfläche des Schraubenkopfes im montierten Zustand von einem Umbauteil belastet wird.

Bevorzugt ist eine erfindungsgemäße Vorrichtung derart gestaltet, daß das die Außenoberfläche des Innenteils rotationssymmetrisch gestaltet ist, und zwar zumindest im Bereich des Außenteils.

Bevorzugt ist eine erfindungsgemäße Vorrichtung derart gestaltet, daß das die Außenoberfläche des Außenteils rotationssymmetrisch gestaltet ist.

Bevorzugt ist eine erfindungsgemäße Vorrichtung derart gestaltet, daß das die Innenoberfläche des Außenteils rotationssymmetrisch gestaltet ist.

Bevorzugt ist eine erfindungsgemäße Vorrichtung derart gestaltet, daß das Innenteil gegenüber dem Außenteil in axialer Richtung gesichert ist.

Bevorzugt ist eine erfindungsgemäße Vorrichtung derart gestaltet, daß das die Außenoberfläche des Innenteils eine sich in Umfangsrichtung erstreckende Nut aufweist.

Bevorzugt ist eine erfindungsgemäße Vorrichtung derart gestaltet, daß das die Innenoberfläche des Außenteils eine sich in Umfangsrichtung erstreckende Nut aufweist.

Bevorzugt ist eine erfindungsgemäße Vorrichtung derart gestaltet, daß sich ein Sicherungselement, wie Sprengring oder dergleichen, sowohl in die in der Außenoberfläche des Innenteils vorgesehen Nut erstreckt als auch in die in der Innenoberfläche des Außenteils vorgesehene Nut.

Bevorzugt ist eine erfindungsgemäße Vorrichtung derart gestaltet, daß das Außenteil als Gleitelement, wie Gleitring oder Gleitbuchse, gestaltet ist.

Bevorzugt ist eine erfindungsgemäße Vorrichtung derart gestaltet, daß das sich Außenteil radial außerhalb um die rotationssymmetrische Vertiefung erstreckt.

Bevorzugt ist eine erfindungsgemäße Vorrichtung derart gestaltet, daß sich die rotationssymmetrische Vertiefung in das Innenteil erstreckt.

Bevorzugt ist eine erfindungsgemäße Vorrichtung derart gestaltet, daß das Außenteil im wesentlichen starr gestaltet ist.

Bevorzugt ist eine erfindungsgemäße Vorrichtung derart gestaltet, daß das Außenteil einstückig gestaltet ist.

Bevorzugt ist eine erfindungsgemäße Vorrichtung derart gestaltet, daß das Innenteil einstückig gestaltet ist.

Bevorzugt ist eine erfindungsgemäße Vorrichtung derart gestaltet, daß das Außenteil mit dem Innenteil im Bereich der rotationssymmetrischen Vertiefung in axialer Richtung im wesentlichen bündig abschließt.

Bevorzugt ist eine erfindungsgemäße Vorrichtung derart gestaltet, daß das Innenteil auf seiner Außenoberfläche einen Bereich mit vermindertem Außendurchmesser aufweist, in welchen sich daß Außenteil erstreckt.

Bevorzugt ist eine erfindungsgemäße Vorrichtung derart gestaltet, daß der Bereich, in welchem das Innenteil auf seiner Außenoberfläche einen verminderten Außendurchmesser aufweist, im Bereich des offenen Endes der rotationssymmetrischen Vertiefung angeordnet ist.

Die Erfindung soll durch die beispielhaften und bevorzugten Ausführungsformen nicht beschränkt werden.

Im folgenden werden beispielhafte Ausführungsformen der Erfindung anhand der Fig. näher beschrieben, wodurch die Erfindung nicht beschränkt werden soll.

Dabei zeigt:
- Fig. 1: eine erste beispielhafte Ausführungsform der Erfindung in schematischer Darstellung;
- Fig. 2: eine Ansicht entlang der Linie 2-2 aus Fig. 1;
- Fig. 3: eine zweite beispielhafte Ausführungsform der Erfindung in schematischer Darstellung;
- Fig. 4: eine Ansicht entlang der Linie 4-4 aus Fig. 3 in ge- drehter Darstellung;
- Fig. 5: eine Explosionsansicht einer beispielhaften Ausfüh- rungsform der Erfindung in schematischer Ansicht;
- Fig. 6: eine erste Ansicht, welche eine beispielhafte Wirkungs- weise der Erfindung verdeutlicht;
- Fig. 7: eine zweite Ansicht, welche eine beispielhafte Wir- kungsweise der Erfindung verdeutlicht;
- Fig. 8: die Darstellung gemäß Fig. 1 in einer beispielhaften Verwendung der Erfindung;
- Fig. 9: ein beispielhaftes Zusammenwirken der Ausführungsformen gemäß Fig. 1 und Fig. 4;
- Fig. 10: ein beispielhaftes Zusammenwirken der Ausführungsformen gemäß den Fig. 1 und Fig. 4 in einem Anwendungsbeispiel gemäß Fig. 9.
- Fig. 11: eine beispielhafte Ausführungsform der Erfindung in schematischer Darstellung;
- Fig. 12: eine beispielhafte Ausführungsform der Erfindung in schematischer Darstellung;
- Fig. 13: eine Schnittansicht entlang der Linie 13-13 aus Fig. 11 bzw. aus Fig. 12;
- Fig. 14: eine beispielhafte Ausführungsform der Erfindung in schematischer Darstellung;
- Fig. 15: eine Schnittansicht entlang der Linie 15-15 aus Fig. 14;
- Fig. 16: eine schematische Explosionsansicht einer beispielhaf- ten Ausführungsform der Erfindung;
- Fig.17: eine beispielhafte Ausführungsform der Erfindung in schematischer Darstellung;
- Fig. 18: eine Ansicht entlang der Linie 18-18 aus Fig. 17;
- Fig. 19: eine beispielhafte Ausführungsform der Erfindung in schematischer Darstellung;
- Fig. 20: eine beispielhafte Ausführungsform der Erfindung in schematischer Darstellung;
- Fig. 21: eine Ansicht entlang der Linie 21-21 aus Fig. 19;
- Fig. 22: eine Ansicht entlang der Linie 22-22 aus Fig. 20;
- Fig. 23: eine Ansicht entlang der Linie 23-23 aus Fig. 19; und
- Fig. 24: eine Ansicht entlang der Linie 24-24 aus Fig. 20.

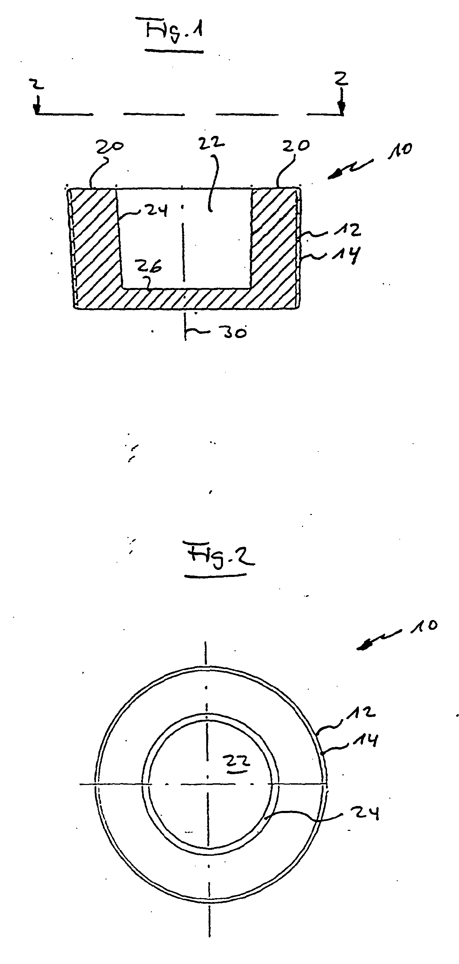

Fig. 1 zeigt eine beispielhafte erfindungsgemäße erste Baueinheit bzw. einen erfindungsgemäßen Stopfen in schematischer Darstellung.

Die erste Baueinheit bzw. der Stopfen 10 - im folgenden wird von dem Stopfen gesprochen - ist im wesentlichen rotationssymmetrisch und einstückig gestaltet und weist eine zylindrische Außenmantelfläche bzw. Außenoberfläche 12 auf, welche mit einem Gewinde 14 versehen ist. Die Außenoberfläche 16 des Stopfens 10 weist ferner eine Bodenfläche 18 auf, welche im wesentlichen eben gestaltet ist. Bevorzugt sind auch andere Gestaltungen dieser äußeren Bodenfläche 18.

An seinem der Bodenfläche 18 abgewandten Ende weist der Stopfen 10 eine kreisringförmige Stirnfläche 20 auf, in welche sich eine rotationssymmetrische Vertiefung 22 erstreckt.

Die Stirnfläche 20 ist im wesentlichen eben gestaltet.

Die rotationssymmetrische Vertiefung 22 weist eine rotationssymmetrisch gestaltete (Innen-)Mantelfläche 24 auf, welche sich in Richtung des Bodenbereichs 26 der rotationssymmetrischen Vertiefung 22 verjüngt und insbesondere konisch gestaltet ist. Die (Innen-)Mantelfläche 24 sowie die Bodenfläche 26 sind frei von Profilierungen. Im Übergangsbereich 28 zwischen der (Innen)Mantelfläche 24 sowie der Bodenfläche 26 weist die rotationssymmetrische Vertiefung 22 einen kantenförmigen Übergangsbereich auf, welcher sich im wesentlichen kreisförmig erstreckt. Anstelle dieses kantenförmigen Übergangsbereichs sind auch anders gestaltete Übergangsbereiche bevorzugt, wie beispielsweise ein abgerundeter Übergangsbereich.
Fig. 2 zeigt eine Ansicht entlang der Linie 2-2 aus Fig. 1.
Fig. 2 verdeutlicht insbesondere die kreisringförmige Gestaltung der dem Boden 18 abgewandten Stirnfläche 20, das an der Außenmantelfläche 12 des Stopfens 10 angeordnete Gewinde 14, welches sich im wesentlichen konzentrisch um die Längsachse 30 bzw. die Rotationsachse 30 des Stopfens 10 erstreckt sowie die konische Gestaltung der (Innen-)Mantelfläche 24 der rotationssymmetrischen Vertiefung 22.

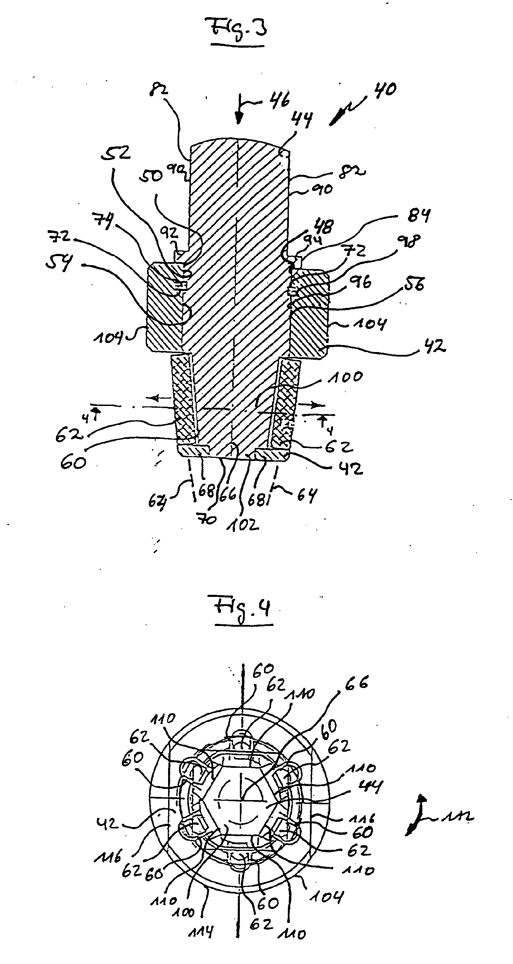

Fig. 3 zeigt eine beispielhafte erfindungsgemäße zweite Baueinheit bzw. ein erfindungsgemäßes Werkzeug bzw. einen erfindungsgemäßen Werkzeugadapter 40. Im folgenden wird, ohne daß dies eine Beschränkung darstellen soll, von einem erfindungsgemäßen Werkzeug 40 gesprochen.

Das erfindungsgemäße Werkzeug 40 weist ein Außenteil 42 sowie ein Innenteil 44 auf.

Das Außenteil 42 weist eine Öffnung 48 auf, in welcher das Innenteil 44 angeordnet ist bzw. in welche das Innenteil 44, insbesondere zu Montagezwecken, in Richtung des Pfeils 46 eingeführt werden kann. Innerhalb des Außenteils 42 ist im wesentlichen benachbart zum Öffnungsquerschnitt 50 in der durch den Pfeil 46 angedeuteten axialen Richtung ein oberer Abschnitt 52 des Außenteils 42 vorgesehen, welcher rotationssymmetrisch gestaltet ist und welcher eine im wesentlichen zylindrische Wandung 54 aufweist, die die Öffnung 48 bzw. die Vertiefung 56 des Außenteils 42 nach radial außen in diesem Abschnitt 52 begrenzt. In axialer Richtung ist unterhalb dieses Bereichs 52 ein unterer, käfigartiger Bereich 60 vorgesehen, welcher verschiedene Reibkörper 62 aufnimmt.

Diese Reibkörper 62 sind walzenartig gestaltet und erstrecken sich mit ihren durch die gestrichelten Linien 64 angedeuteten Längsachsen unter einem Winkel zur Längsachse 66 des Werkzeugs 40 bzw. des Außenteils 42 bzw. des Innenteils 44, und zwar insbesondere derart, daß sie in Einführrichtung des Innenteils 44 bzw. in Richtung des Pfeils 46 aufeinander zulaufen. Im unteren Bereich 60 des Außenteils 42 weist dieses Außenteil 42 einen ringförmigen Boden 68 auf, welcher mit einer kreisförmigen Öffnung 70 versehen ist.

Im oberen Bereich 52 ist eine zur Längsachse 66 konzentrische Nut 72 zur Aufnahme eines Sicherungsringes 74 vorgesehen, über welchen das Innenteil 44 gegenüber dem Außenteil 42 axial fixiert werden kann.

Das Innenteil 44 weist vorzugsweise in seinem dem Boden 68 abgewandten Endbereich einen Bereich 82 auf, welcher derart gestaltet ist, daß in diesen Bereich 82 ein weiteres Werkzeug, wie Schraubenschlüssel oder Schraubendreher oder Zange formschlüssig eingreifen kann, so daß das Innenteil 44 um die Achse 66 relativ zum Außenteil 42 verdreht wird. In der Ausführungsform gemäß Fig. 3 ist dies derart gestaltet, daß der Bereich 82 des Innenteils 44 eine im wesentlichen quadratische Querschnittsfläche aufweist, so daß am Außenumfang 84 abgeflachte Bereiche 90 gegeben sind. Dieser Bereich 82 weist im seinerseits unteren Bereich 92 in der Darstellung gemäß Fig. 3 einen zylindrischen Flansch bzw. Bereich 94 auf, welcher außerhalb der Bereiche, in welchen die abgeflachten Bereiche 90 jeweils, gegebenenfalls über eine Fase, aneinandergrenzen, im wesentlichen flanschartig nach radial außen hervorsteht. Gegebenenfalls schließen die Fasen bzw. die Bereich, in denen jeweils zwei abgeflachte Bereiche 90 aneinandergrenzen, in radialer Richtung mit dem zylindrischen Bereich ab. Dieser zylindrischen Bereich 94 liegt in axialer Richtung an dem Außenteil 42 an und stützt sich gegebenenfalls gegen dieses Außenteil 42 ab.

Unterhalb dieses Bereichs 82 weist das Innenteil 44 einen zylindrischen Bereich 96 auf, welcher innerhalb der zylindrischen Wandung 54 des Bereichs 52 drehbeweglich geführt wird und welcher auf seinem Außenmantel eine nutförmige Vertiefung 98 zur Aufnahme des Sicherungsrings 74 aufweist. Unterhalb dieses zylindrisch gestalteten Bereichs 96 weist das Innenteil 44 einen sich in Richtung der Längsachse 66 verjüngenden Bereich 100 auf, welcher auf seiner Außenoberfläche - was in Fig. 3 nicht dargestellt ist - ebene Flächen aufweist, so daß dieser Bereich im wesentlichen pyramidenstumpfartig gestaltet ist, wobei gegebenenfalls die Übergänge zwischen den jeweils in Umfangsrichtung benachbarten ebenen Flächen abgerundet gestaltet sind. Unterhalb dieses pyramidenstumpfartig gestalteten Bereichs 100 weist das Innenteil 44 einen zylindrischen Bereich 102 auf, welcher sich in die Bodenöffnung 70 des ringförmigen Bodens 68 des Außenteils 42 erstreckt und welcher sich vorzugsweise konzentrisch zum Außenteil 42 an diesem Außenteil 42 in radialer Richtung drehbeweglich abstützt bzw. drehbeweglich geführt wird.

Gegebenenfalls sind in dem sich an die Öffnung 48 anschließenden Bereich 52 des Außenteils 42, welcher innen zylindrisch gestaltet ist, auf der Außenoberfläche 104 Profilierungen oder abgeflachte Bereiche oder dergleichen vorgesehen, in welche ein Werkzeug wie Schraubenschlüssel oder dergleichen eingreifen kann, so daß insbesondere ein Gegenmoment zu einem auf das Innenteil 44 bewirkten Drehmoment erzeugt werden kann.

Fig. 4 zeigt eine Ansicht entlang der Linie 4-4 aus Fig. 3 in gedrehter Darstellung.

Fig. 4 verdeutlicht insbesondere die Gestaltung und Anordnung der ebenen Flächen 110 des pyramidenstumpfförmigen Bereichs 100 des Innenteils 44 zu den im Käfig 60 angeordneten Walzen 62.

Die Außenkontur des kegelstumpfförmigen Bereichs 100 des Innenteils 40 weist eine Querschnittsfläche auf, die von sechs Seiten begrenzt wird, deren Länge jeweils gleich ist, wobei jeweils zwei benachbarte Seiten unter dem gleichen Winkel aneinander grenzen wie die anderen jeweils benachbarten Seiten.

Die Walzen 62 werden im Käfig 60 in radialer Richtung bezüglich der senkrecht zur Zeichenebene ausgerichteten Längsachse 66 des Werkzeugs 40 bzw. des Außenteils 42 bzw. des Innenteils 44 geführt und sind in ihrer Beweglichkeit in der durch den Pfeil 112 angedeuteten Umfangsrichtung beschränkt, wobei ausreichend Spiel gegeben ist, welches ermöglicht, daß die Walzen 62 in radialer Richtung beweglich sind.

Die ansonsten im wesentlichen zylindrisch gestaltete Außenkontur 114 des oberen Bereichs 52 des Außenteils 42 weist - in Fig. 3 nicht gezeigte - abgeflachte Ausnehmungen auf, welche auf einander gegenüber liegenden Seiten angeordnet sind.

Eine Verdrehung des Innenteils 44 gegenüber dem Außenteil 42 in Umfangsrichtung 112 bewirkt, daß die Flächen 110 des pyramidenstumpfartigen Bereichs 100 des Innenteils 44 die Walzen 62 radial nach außen drücken, so daß diese weiter durch Öffnungen des Käfigs 60 radial nach außen bewegt werden.

Wenn diese radial nach außen gedrückten Walzen 62 gegen eine entsprechend gestaltete Fläche gedrückt werden, wie beispielsweise die rotationssymmetrisch gestaltete (Innen-)Mantelfläche 24 der Vertiefung 22 des Stopfens 40 aus Fig. 1, kann ein Reib- bzw. Klemmschluß bewirkt werden, welcher vorzugsweise ermöglicht, daß zwischen dem Werkzeug 40 und dieser Fläche ein Drehmoment übertragen werden kann.

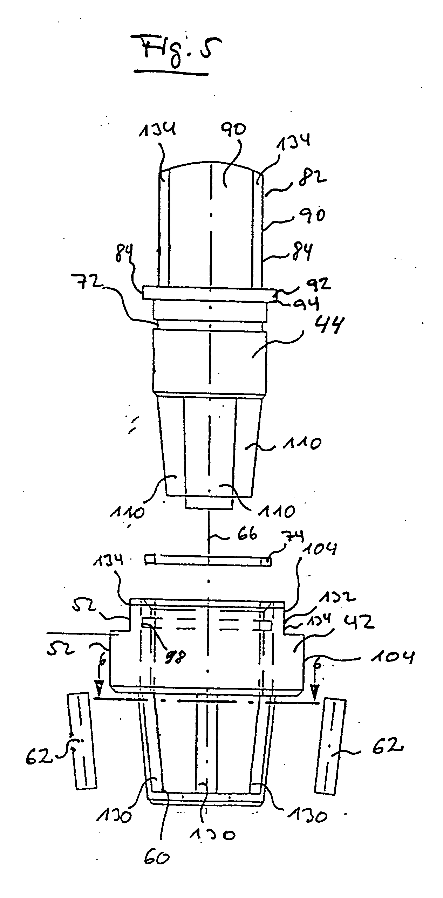

Fig. 5 zeigt eine schematische Explosionszeichnung der Ausführungsform gemäß Fig. 3 in um die zentrale Längsachse 66 gedrehter Darstellung.

Insbesondere zeigt Fig. 5 das Innenteil 44, das Außenteil 42 mit den Walzen 62 sowie einen Sicherungsring 72, über welchen das Innenteil 44 mit dem Außenteil 42 axial fixiert werden kann.

Der Käfig 60 des Außenteils 42 weist Aufnahmebereiche 130 auf, in welchen die Walzen 62 radialbeweglich aufgenommen werden.

Die Außenkontur 104 des Bereichs 52 ist im wesentlichen zylindrisch gestaltet und weist in einem Teilbereich abgeflachte Ausnehmungen 132 auf, welche zwei parallele Flächen 134 bilden, in welche ein Werkzeug, wie Schraubenschlüssel oder dergleichen, eingreifen kann, um ein Drehmoment um die zentrale Achse 66 zu erzeugen.

In Fig. 5 sind ferner die ebenen Flächen 110 des pyramidenstumpfförmigen Bereichs 100 des Innenteils 44 verdeutlicht. In der Darstellung gemäß Fig. 5 sind drei abgeflachte Bereiche 110 dargestellt, wobei der mittlere dieser Bereiche in einer Frontalansicht und die außen liegenden, an diesen mittleren Bereich 110 angrenzenden abgeflachten bzw. ebenen Bereiche 110 unter einem Winkel dargestellt sind, da diese schräg in die Zeichenebene verlaufen.

Fig. 5 verdeutlicht ferner einen der vier abgeflachten Bereiche 90, welche im Außenumfang 84 des Bereichs 82 des Innenteils 44 gegeben sind und von welchem jeweils zwei parallel zueinander angeordnet sind und von denen jeweils zwei aneinander grenzende abgeflachte Bereiche 90 senkrecht aufeinander stehen und über Phasen 134 verbunden sind.

Es sei angemerkt, daß anstelle der Walzen 62 auch andere Reibkörper vorgesehen sein können, wie Kugeln oder dergleichen. Besonders bevorzugt sind anstelle jeweils einer Walze mehrere Kugeln linear in Reihe ausgerichtet, so daß diese Kugeln im wesentlichen einen zylindrischen Bereich aufspannen, der im wesentlichen dem durch die Walzen 62 aufgespannten zylindrischen Bereich entspricht. Gegebenenfalls ist die Lage des durch die Kugeln gebildeten zylindrischen Bereichs derart, wie es für die Walzen bzw. deren zylindrischen Bereich beschrieben wurde. Die Kugeln können beabstandet sein oder unter Berührung aneinander angrenzen.

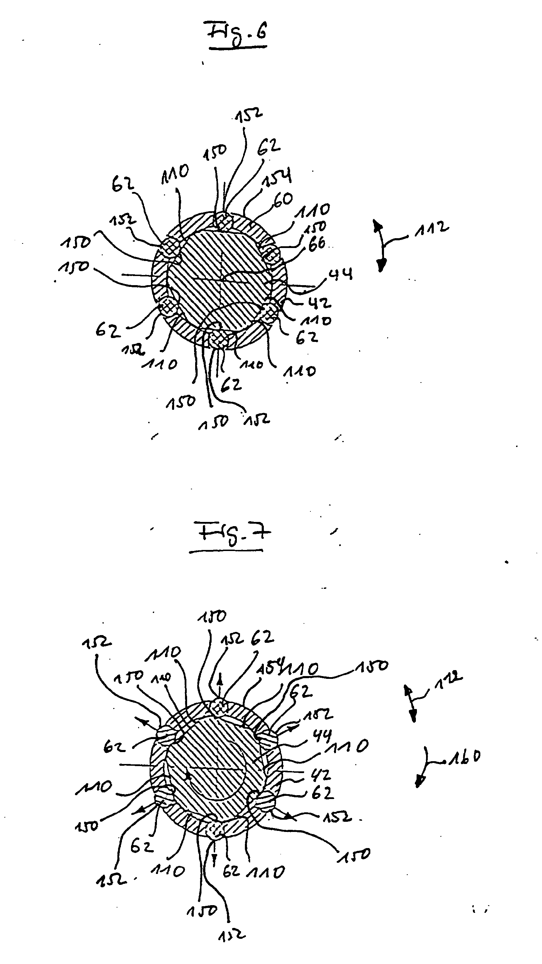

Anhand der Fig. 6 und 7 wird nun ein Aspekt der Funktionsweise der erfindungsgemäßen Vorrichtung näher erläutert.

Die Fig. 6 und 7 zeigen jeweils eine Querschnittsansicht eines allerdings montierten Werkzeugs 40 entlang der Linie 6-6 aus Fig. 5.

Die Fig. 6 und 7 unterscheiden sich insbesondere dadurch, daß das Innenteil 44 und das Außenteil 42 in unterschiedlichen Relativstellungen zueinander dargestellt sind.

In der in Fig. 6 dargestellten Relativstellung kontaktieren die im Käfig 60 angeordneten Walzen 62 die ebenen Flächen des pyramidenstumpfartig gestalteten Bereichs des Innenteils 44 in einem Kontaktbereich 150. In Umfangsrichtung 112 stützen sich die Walzen 62, gegebenenfalls mit Spiel, gegen den Käfig 60 ab.

Die Kontaktbereiche 150 sind, im Vergleich zur Darstellung gemäß Fig. 7, näher an der sich in die Bildebene der Fig. 6 erstreckenden zentralen Achse 66 des Innenteils 44 angeordnet. Die radial äußeren Bereiche 152 der Walzen 62 sind weiter radial innen angeordnet als in der Relativstellung gemäß Fig. 7.

Diese radial äußeren Bereiche 152 der Walzen 62 sind radial innerhalb der Außenmantelfläche 154 des Käfigs 60 angeordnet oder schließen in radialer Richtung im wesentlichen mit der Außenmantelfläche 154 des Käfigs 60 ab oder sind radial außerhalb der Mantelfläche 154 des Käfigs 60 angeordnet.

In der Darstellung gemäß Fig. 7 ist das Innenteil 44 - im Vergleich zur Darstellung gemäß Fig. 6 - relativ zum Außenteil 42 in Umfangsrichtung 112 bzw. in Richtung des Pfeils 160 verdreht worden. Diese Drehbewegung hat bewirkt, daß die Kontaktbereiche 150, insbesondere aufgrund der Gestaltung der Flächen 110 bzw. der Außenkontur des pyramidenstumpfförmigen Bereichs 100, radial nach außen gewandert ist, so daß auch die radial äußeren Kontaktbereiche 150 der Walzen 62 radial weiter nach außen gewandert sind. In dieser Relativstellung stehen die radial äußeren Bereiche 152 der Walzen 62 zumindest radial weiter nach außen über die Außenmantelfläche 154 des Käfigs 60 hervor als in der Relativstellung gemäß Fig. 6.

In dieser Relativstellung können sich die radial äußeren Bereiche 152 der Walzen 62 gegen eine nicht dargestellte im wesentlichen rotationssymmetrische (Innen-)Mantelfläche einer Vertiefung, wie beispielsweise der Vertiefung 22 des Stopfens 10 gemäß Fig. 1, reibschlüssig abstützen, so daß bei weiterer Relativverdrehung zwischen dem Innenteil 44 und dem Außenteil 42 ein Drehmoment zwischen diesen Teilen um die zentrale Achse 66 übertragen wird.

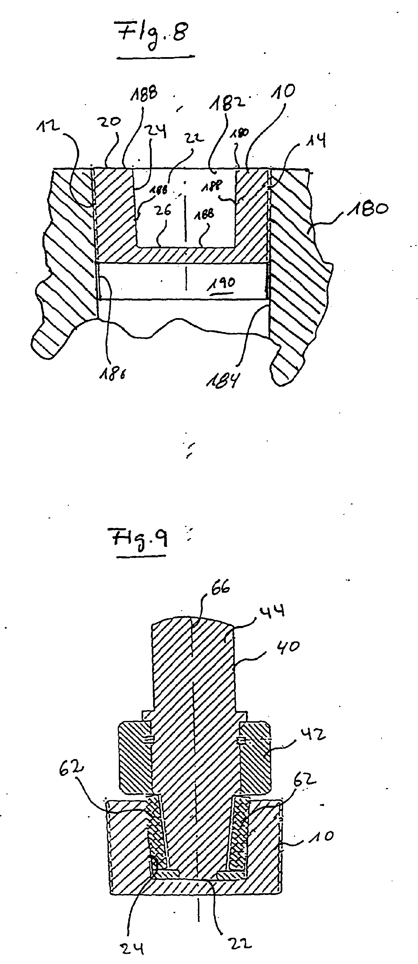

Fig. 8 zeigt den erfindungsgemäßen Stopfen 10 gemäß Fig. 1 in einer beispielhaften Verwendung.

Fig. 8 zeigt insbesondere ein Bauteil mit einer Öffnung 182, welches insbesondere als Rohr 180 gestaltet ist.

Im Bereich der Öffnung 182 weist das Rohr 180 einen rotationssymmetrischen Endbereich 184 auf, welcher mit einem Gewinde, insbesondere mit einem Innengewinde 186, versehen ist. Dieses Innengewinde 186 ist an das Außengewinde 14 des Stopfens 10 angepaßt, so daß der Stopfen 10 in das Innengewinde 186 des offenen Rohrendbereichs 184 eingeschraubt werden kann.

Die im verschraubten Zustand zur Rohraußenseite frei liegenden Oberflächenbereiche 188 sind derart gestaltet, daß sie im wesentlichen keine Angriffsflächen für Standardwerkzeuge wie Zange, Schraubendreher, Schraubenschlüssel oder dergleichen aufweisen, so daß mit derartigen Werkzeugen der Stopfen 10 aus dem Rohrende bzw. dem Rohrendbereich 184 nicht ohne weiteres entfernt werden kann.

Insbesondere sind die Stirnfläche 20 sowie die (Innen-)Mantelfläche 24 und die Bodenfläche 26 der Vertiefung 22 innerhalb des Stopfens 10 unprofiliert gestaltet. Die (Innen-)Mantelfläche 24 ist ferner rotationssymmetrisch gestaltet. Insbesondere verläuft die (Innen-)Mantelfläche 24 konisch in Richtung des Rohrinneren 190. Der Stopfen 10 ist vorzugsweise derart in dem Rohr 180 montierbar, daß nur Stirnflächen des Stopfens, wie die Stirnfläche 20 oder die Bodenfläche 26, sowie Innenflächen, wie die (Innen-)Mantelfläche 24 der Vertiefung 22, in Richtung des Rohräußeren frei liegen, während Außenflächen des Stopfens, wie die Außenmantelfläche 12, dem Rohrinneren 190 zugewandt sind oder am Rohr 180 vollständig anliegen. Hierdurch wird insbesondere verhindert, daß von radial außen in den Stopfen 10 zur Demontage eingegriffen werden kann.

Fig. 9 zeigt ein erfindungsgemäßes Werkzeug 40, welches im wesentlichen derart gestaltet ist wie das anhand der Fig. 4 beschriebene, sowie einen Stopfen 10, der im wesentlichen dem anhand der Fig. 1 beschriebenen Stopfen entspricht. Zur Montage und Demontage des Stopfens wird das Werkzeug 40 in die rotationssymmetrische Vertiefung 22 des Stopfens eingeführt, und zwar derart, daß die Reibkörper bzw. Walzen 62 im wesentlichen zumindest teilweise radial innerhalb der (Innen-)Mantelfläche 24 der rotationssymmetrischen Vertiefung 22 angeordnet sind. Anschließend wird das Innenteil 44 des Werkzeugs 40 gegenüber dem Außenteil 42 des Werkzeugs 40 um die zentrale Achse 66 verdreht, so daß, wie bereits im Rahmen dieser Erfindung beschrieben wurde, die Reibkörper bzw. Walzen 62 radial nach außen bzw. senkrecht zur konischen (Innen-)Mantelfläche 24 der Vertiefung 22 bewegt werden bzw. gegen diese (Innen-)Mantelfläche 24 gedrückt werden. Infolge dieses Druckes wird eine reibschlüssige Verbindung zwischen den Reibkörpern 62 und der (Innen-)Mantelfläche 24 der rotationssymmetrischen Vertiefung 22 des Stopfens erzeugt, welche derart gestaltet ist, daß zwischen dem Werkzeug 40 und dem Stopfen 10 bei weitere Verdrehung um die Drehachse 66 ein Drehmoment von dem Werkzeug 40 auf den Stopfen 10 übertragen werden kann, und zwar insbesondere in beiden Drehrichtungen.

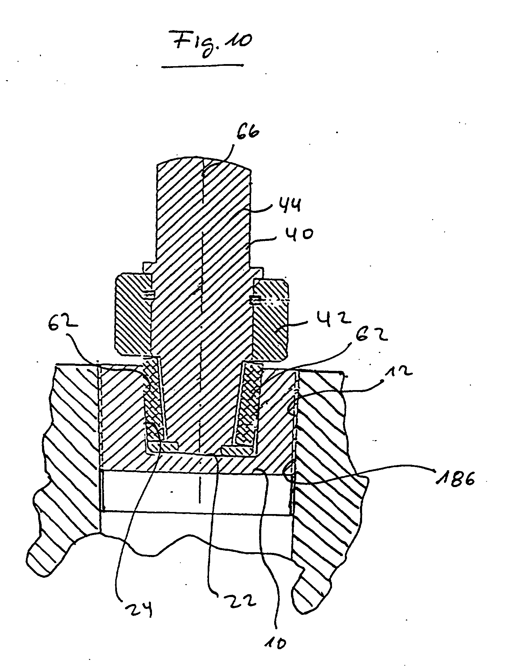

Fig. 10 zeigt im wesentlichen eine Kombination der Fig. 8 und 9. Das Werkzeug 40 ist innerhalb der rotationssymmetrischen Vertiefung 22 des Stopfens 10 angeordnet, so daß über eine entsprechende Drehbewegung des Werkzeugs 40 um die Längs- bzw. Drehachse 66 - zumindest nach einer gewissen Verdrehung - ein Drehmoment auf den Stopfen 10 übertragen werden kann. Die Orientierung dieses Drehmoments hängt von der Drehrichtung ab, in welcher das Werkzeug 40 um die Drehachse 86 gedreht wird. Dieses von dem Werkzeug 40 auf den Stopfen 10 übertragene Drehmoment bewirkt, daß der Stopfen 10, geführt durch den Gewindeeingriff 14, 186 in die Rohröffnung 182 zum Verschließen dieser Rohröffnung 182 eingeführt wird oder, bei entgegengesetzter Drehrichtung um die Drehachse 66, aus der Rohröffnung 182 zum Öffnen dieser Rohröffnung 182 herausgeführt wird.

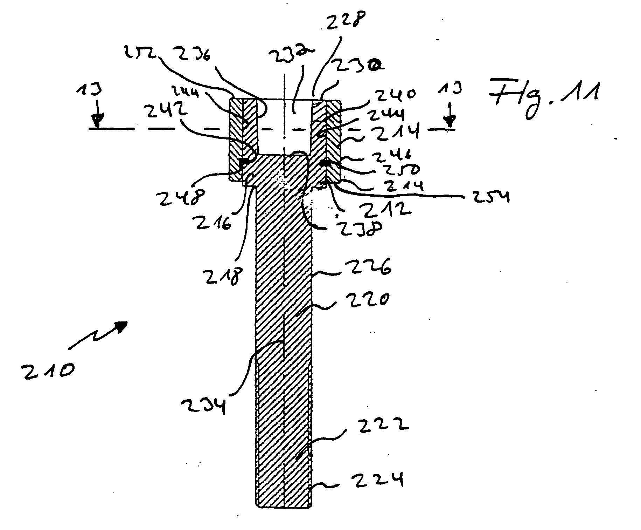

Fig. 11 zeigt eine beispielhafte Ausführungsform der Erfindung in schematischer Darstellung.

In Fig. 11 ist insbesondere eine als Schraube 210 gestaltete Befestigungselement-Vorrichtung gezeigt.

Die Schraube 210 weist ein Innenteil 212 sowie ein Außenteil 214 auf. Diesem Innenteil 212 ist ein Schraubenkopf 216 zugeordnet, dessen Umfang größer ist, als der Umfang des sich an einem unteren axialen Ende 218 in axialer Richtung anschließenden Schraubenschafts 220.

Erfindungsgemäß sind allerdings auch Gestaltungen bevorzugt, auch wenn dies in den Figuren nicht gezeigt ist, bei welchen der Schraubenkopf 216 einen Umfang bzw. Durchmesser aufweist, der dem Umfang des Schraubenschafts 220 entspricht oder kleiner als dieser gestaltet ist. Bevorzugt ist ferner, daß der Außenumfang bzw. Durchmesser des Außenteils 214 kleiner oder gleich dem Außenumfang bzw. Durchmesser des Schraubenschafts 220 ist.

Der Schraubenschaft weist einen unteren, vom Schraubenkopf 212 abgewandten Bereich 222 auf, der auf seinem Außenumfang ein Gewinde 224 trägt.

Zwischen diesem unteren Bereich 222 und dem Schraubenkopf 212 weist der Schraubenschaft 220 einen Bereich 226 auf, der gewindefrei gestaltet ist.

Der Schraubenkopf 216 und der Schraubenschaft 220 sind einstükkig gestaltet.

An seinem schraubenschaftabgewandten Ende 218 erstreckt sich in der Stirnfläche 230 des Schraubenkopfs 216 eine rotationssymmetrische Vertiefung 232, die im wesentlichen konzentrisch zur zentralen Längsachse 234 angeordnet ist.

Die rotationssymmetrische Vertiefung wird in radial nach außen liegender Richtung durch eine konisch in Richtung des Schraubenschafts 220 zu laufende Seitenwandung 236 begrenzt, die Kreisquerschnitte aufweist. Der Bodenbereich 238 der rotationssymmetrischen Vertiefung 232 ist eben und kreisförmig gestaltet.

Die Bodenfläche 238 sowie die Seitenwandung 236 der rotationssymmetrischen Vertiefung 232 sind profilierungsfrei gestaltet.

Die Außenoberfläche 240 des Schraubenkopfes 216 ist rotationssymmetrisch und zylindrisch gestaltet und weist eine in Umfangsrichtung umlaufende Nut 242 auf.

Die rotationssymmetrische Innenoberfläche 244 sowie die rotationssymmetrische Außenoberfläche 246 sind jeweils zylindrisch gestaltet, wobei in der Innenoberfläche 244 eine umlaufende Umfangsnut 248 vorgesehen ist.

Ein Sprengring 250 erstreckt sich in die Nut 242 sowie in die Nut 248, so daß das Außenteil 214 gegenüber dem Innenteil 212 in axialer Richtung gesichert ist.

Das Außenteil 214 ist drehbeweglich gegenüber dem Innenteil 212 bzw. dem Schraubenkopf 216 angeordnet und zwar insbesondere bezüglich der zentralen Längsachse 234.

Zur Montage oder Demontage kann in die rotationssymmetrische Vertiefung 232 ein Werkzeugadapter 40 eingeführt werden, der beispielsweise derart gestaltet ist, wie ein Werkzeugadapter gemäß einer Ausführungsform, die anhand der Figuren 3 bis 7 sowie 9 und 10 erläutert wurde.

Das Außenteil 214 stellt insbesondere sicher, daß die Schraube 210 nicht mittels eines um den Außenumfang des Schraubenkopfes 216 angreifenden Werkzeugs, wie Zange oder dergleichen, montiert oder demontiert werden kann. Bei einem derartigen Versuch durch Eingreifen um den Außenumfang der Schraube 210 ein Drehmoment auf diese Schraube auszuüben, würde das Außenteil 214 sich relativ zum Schraubenkopf 216 verdrehen, so daß im wesentlichen kein Drehmoment auf den Schraubenkopf 216 bzw. die Schraube 210 bewirkt werden würde.

Das obere, dem Schraubenschaft 220 abgewandte Ende 252 des Außenteils 214 schließt im wesentlichen bündig mit dem schraubenschaftabgewandten Ende 218 des Schraubenkopfes 216 ab.

Das untere, dem Schraubenschaft 220 zugewandte Ende 218 des Schraubenkopfes 216 ragt aus dem Außenteil 214 geringfügig heraus, so daß dieses Ende sich weiter in Richtung des Schraubenschafts 220 erstreckt, als das untere, dem Schraubenschaft zugewandte Ende 254 des Außenteils 214.

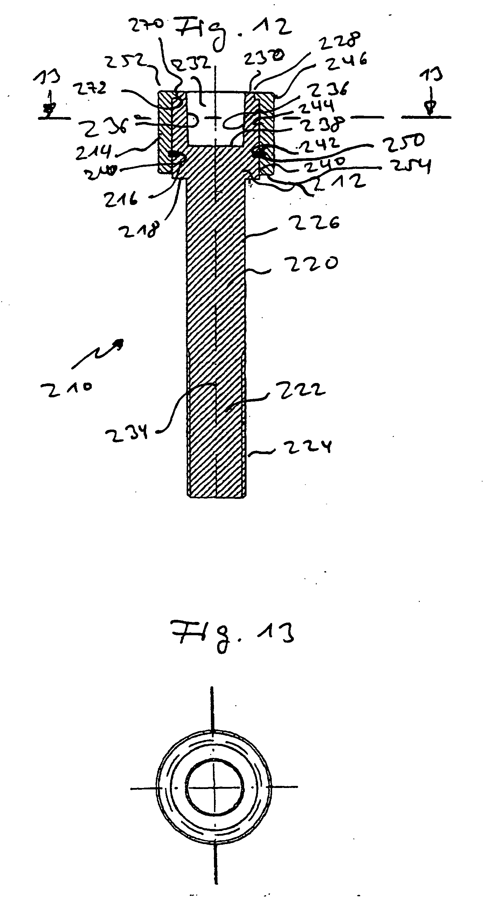

Fig. 12 zeigt eine beispielhafte Ausführungsform der Erfindung in schematischer Darstellung.

Die in Fig. 12 dargestellte Schraube 210 entspricht im wesentlichen der in Fig. 11 dargestellten Schraube 210.

Diese Schrauben 210 unterscheiden sich im wesentlichen durch die Gestaltung der Außenoberfläche 240 des Schraubenkopfes 216 sowie durch die Gestaltung der Innenoberfläche 244 des Außenteils 214.

Die Außenoberfläche 240 des Schraubenkopfes 216 sowie die Innenoberfläche 244 des Außenteils 214 weisen jeweils einen Bereich 270, 272 auf, welcher einen verminderten Durchmesser gegenüber den anderen Bereichen dieser Außenoberfläche 240 bzw. dieser Innenoberfläche 244 aufweist.

Der Bereich 272 des Außenteils 214 greift in den Bereich 270 des Schraubenkopfes 216 ein, wobei diese Bereiche 270, 272 jeweils am schraubenschaftabgewandten Ende 228, 252 angeordnet sind.

Auch bei dieser Ausführungsform schließen das Außenteil 214 und der Schraubenkopf 216 an ihrem schraubenschaftabgewandten Ende bündig ab.

Fig. 13 zeigt eine Schnittansicht entlang der Linie 13 aus Fig. 11 bzw. aus Fig. 12.

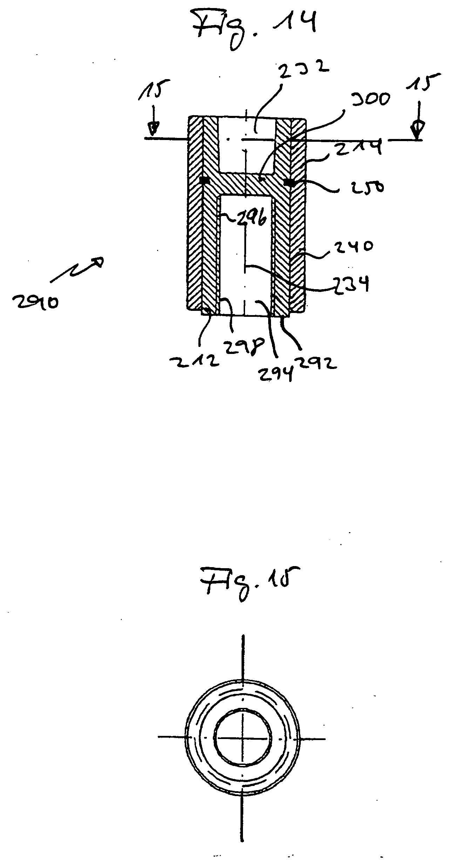

Fig. 14 zeigt eine als Mutter 290 gestaltete Befestigungselement-Vorrichtung.

Die Mutter 290 weist ein H-förmig gestaltetes Innenteil 212 sowie ein im wesentlichen hohlzylindrisch gestaltetes Außenteil 214 auf.

Die Gestaltung der Außenoberfläche 240 des Innenteils 212 ist im wesentlichen derart gestaltet, wie es in Bezug auf die Außenoberfläche 214 des Schraubenkopfes 216 in Bezug auf Fig. 11 erläutert wurde.

Das Außenteil 214 ist im wesentlichen derart gestaltet, wie es in Bezug auf das Außenteil 214 in Fig. 11 erläutert wurde. Auch die Anordnung von Innenteil 212 relativ zum Außenteil 214 ist im wesentlichen derart gestaltet, wie es in Bezug auf Fig. 11 anhand des Schraubenkopfes 216 sowie des Außenteils 214 erläutert wurde.

Anstelle des schraubenschaftzugewandten Endes 218 ist allerdings bei der Mutter 290 in Fig. 14 eine entsprechende Stirnfläche 292 vorgesehen, über welcher ein Umbauteil belastet werden kann.

Im Innenteil 212 ist eine rotationssymmetrische Vertiefung 232 vorgesehen, die im wesentlichen derart gestaltet ist, wie es in Bezug auf die rotationssymmetrische Vertiefung 232 in Fig. 11 erläutert wurde.

Im wesentlichen konzentrisch um die zentrale Achse 234 und axial versetzt gegenüber der rotationssymmetrischen Vertiefung 232 erstreckt sich eine Öffnung 294, an deren die zentrale Achse 234 im wesentlichen konzentrisch umgebende Innenoberfläche 296 ein Innengewinde 298 vorgesehen ist.

In diesem Innengewinde 298 kann eine Schraube oder dergleichen verschraubt werden.

In axialer Richtung ist zwischen der rotationssymmetrischen Vertiefung 232 und der mit Innengewinde 298 versehenen Öffnung 294 ein Zwischenflansch 300 angeordnet. Dieser Zwischenflansch 300 trennt die rotationssymmetrische Vertiefung 232 von der Öffnung 294 und in einer senkrecht zur zentralen Achse 234 angeordneten Ebene.

Fig. 15 zeigt eine Schnittansicht entlang der Linie 15/15 aus Fig. 14.

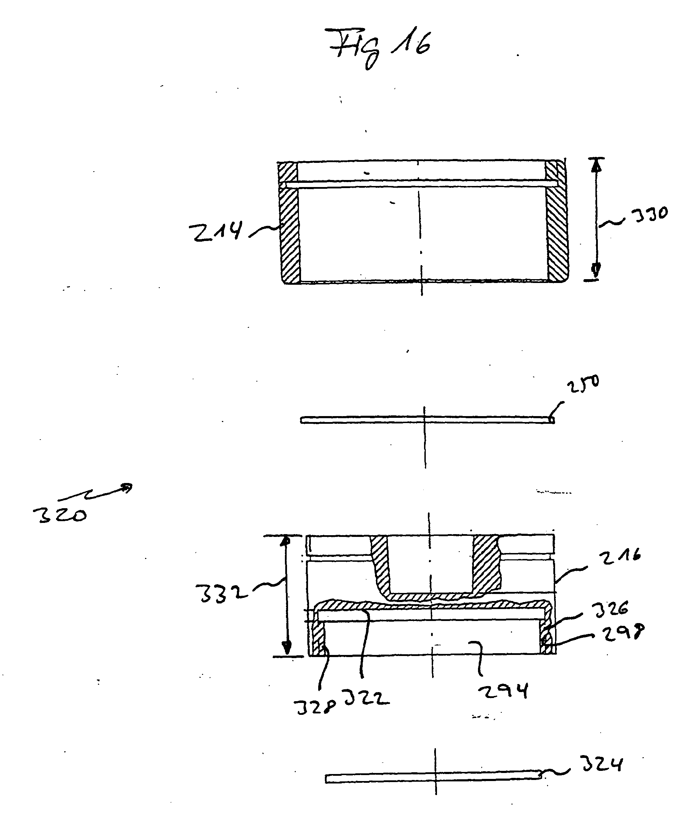

Fig. 16 zeigt eine beispielhafte Ausführungsform der Erfindung in schematischer Darstellung.

In Fig. 16 ist insbesondere eine Explosionszeichnung einer als Sicherheitskappe 320 gestalteten Befestigungselement-Vorrichtung dargestellt.

Die Sicherheitskappe 320 ist im wesentlichen derart gestaltet, wie die Mutter 290, die anhand der Fig. 14 erläutert wurde.

Im folgenden werden nun einige Unterschiede zwischen der Mutter 290 und der Sicherheitskappe 320 erläutert.

Das Außenteil 214 der Sicherheitskappe 320 ist im wesentlichen derart gestaltet, wie das Außenteil 214 der Mutter 290.

Im Bodenbereich 322 der Öffnung 294 wird eine Flächendichtung 324 angeordnet, die im wesentlichen kreisförmig gestaltet ist. Gegen diese Flächendichtung 324 kann, in axialer Richtung, in das Innengewinde 298 der Öffnung 294 ein mit Außengewinde 326 versehenes Umbauteil 328 eingeschraubt werden, welches die Flächendichtung 324 belasten kann und somit ein offenes Ende dieses Umbauteils 328 abdichten kann.

Dieses Umbauteil 328 ist insbesondere ein Rohrende.

Die Sicherheitskappe 320 läßt sich insbesondere als Sicherheitskappe für Einrohr-Gaszähleranschlüsse verwenden.

Das Innenteil ist ansonsten im wesentlichen derart gestaltet, wie das Innenteil 216, das in Bezug auf Fig. 14 bzw. die dort abgebildete Mutter 290 erläutert wurde.

Der Sprengring 250 wird in bereits beschriebener Weise zur axialen Sicherung zwischen dem Innenteil 216 und dem Außenteil 214 angeordnet.

Im Gegensatz zu der Darstellung gemäß Fig. 14 entspricht die durch den Doppelpfeil 330 angedeutete Länge in axialer Richtung des Außenteils 214 im wesentlichen der durch den Doppelpfeil 332 angedeuteten Länge in axialer Richtung des Innenteils 216.

Diese Teile 216, 214 schließen in axialer Richtung bündig miteinander ab.

Das Außenteil 214 bzw. der Gleitring 214 sowie das Innenteil 216 ist vorzugsweise aus galvanisch verzinktem Stahl hergestellt.

Der Sprengring 250 ist vorzugsweise aus Stahl hergestellt.

Die Flächendichtung 324 ist vorzugsweise aus ET-P70 hergestellt.

Es sei angemerkt, daß für sämtliche Bauteile auch andere Materialien verwendet werden können.

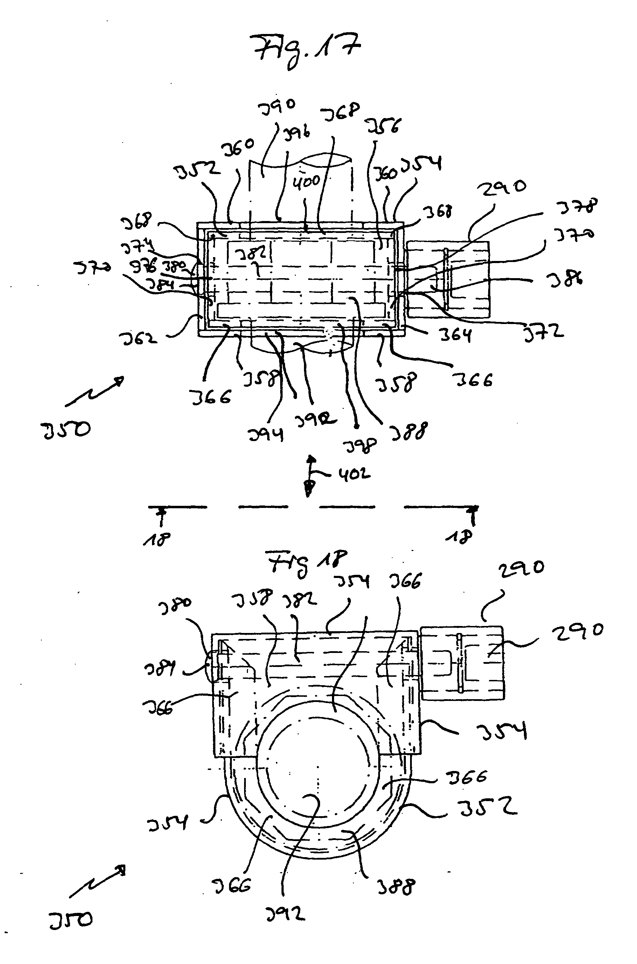

Fig. 17 zeigt eine beispielhafte Ausführungsform der Erfindung in schematischer Darstellung.

In Fig. 17 ist insbesondere eine Verschlußvorrichtung 350 für Montageteile und dergleichen dargestellt.

Derartige Montageteile können Rohrverbindungselemente wie Gasanschlüsse, Verschraubungen oder dergleichen sein. Vorzugsweise ist ein derartiges Montageteil ein einstückig mit einem Rohr versehenes Verschraubungsteil mit Innen- oder Außengewinde, dessen Durchmesser größer als der Rohrdurchmesser ist, wobei in das Gewinde ein anderes Rohr hineingeschraubt werden kann. Ein Montageteil kann auch ohne Gewinde versehen sein und zum Verbinden von Rohren bestimmt sein. Ein Montageteil kann auch ein Schraubenkopf oder eine Mutter sein, in welche sich insbesondere ein Schaft erstrecken kann.

Im Sinne der vorliegenden Erfindung ist unter einem Schaft insbesondere auch ein Rohr zu verstehen oder ein Schaft aus Vollmaterial oder dergleichen.

Insbesondere dient die Verschlußvorrichtung 350 zur Sicherung von Bauelementen, welche einen größeren Umfang bzw. einen größeren Durchmesser aufweisen als sich anschließende Bauelemente oder Teile dieser Bauelemente.

Ein Montageteil kann im Sinne der vorliegenden Erfindung insbesondere auch ein mit Gewinde, insbesondere mit Innengewinde, versehenes Bauteil sein, in welches unterschiedliche Rohre eingeschraubt werden können. Dabei kann dieses Gewinde einerseits ein Linksgewinde und andererseits ein Rechtsgewinde aufweisen oder mit zwei Linksgewinden oder zwei Rechtsgewinden versehen sein.

Die Verschlußvorrichtung weist ein als Überwurfbügel 352 gestaltetes Überwurfelement sowie ein Überwurfschloß 354 auf.

Das Überwurfschloß 354 ist napfartig gestaltet und weist eine Bodenplatte 356, eine obere Abdeckplatte 358, eine untere Abdeckplatte 360, sowie zwei Seitenwandungen 362, 364 auf.

Die Bodenplatte 356 ist im wesentlichen rechteckig gestaltet. An den jeweiligen Kanten der Bodenplatte 356 erstrecken sich senkrecht die Seitenwandungen 362, 364 bzw. die obere 358 und die untere Abdeckplatte 360.

Die obere 366 und untere Abdeckplatte 368 sind im wesentlichen jeweils parallel zueinander angeordnet und, was aus Fig. 17 nicht zu erkennen ist, jeweils U-förmig gestaltet.

Senkrecht zu diesen Abdeckplatten 366, 368 werden diese an ihren äußeren Rand über eine Seitenwandung 370 miteinander verbunden. Die Seitenwandung 370 ist insbesondere ebenfalls U-förmig gestaltet und erstreckt sich im wesentlichen senkrecht zur oberen 366 sowie unteren Abdeckplatte 368 des Überwurfbügels 352.

Der Überwurfbügel 352 kann mit seinem offenen Ende in das offene Ende des Überwurfschlosses 354 eingesteckt werden.

In den Seitenwandungen 362 und 364 ist jeweils eine Öffnung 372, 374 vorgesehen und in der Seitenwandung 370 sind zwei, gegenüberliegende Öffnungen 376, 378 vorgesehen.

Durch diese Öffnungen 372, 374, 376, 378 kann sich der Schaft 382 einer Schraube 380 oder dergleichen erstrecken, so daß der in das Überwurfschloß 254 eingeschobene Überwurfbügel 352 vom Schaft 382 dieser Schraube 380 im Zusammenwirken mit dem Überwurfschloß 354 gehalten werden kann.

Die Schraube 380 ist insbesondere als Schloßschraube gestaltet, so daß ein unterhalb bzw. im Bereich des Kopfes angeordnetes eckiges Element im Zusammenwirken mit der, insbesondere ebenfalls eckig gestalteten Öffnung 374 und/oder 376 eine Verdrehung dieser Schraube 380 innerhalb der Öffnung verhindert.

Insbesondere ist dieses eckige Element bzw. diese Öffnung 374 und/oder 376 quadratisch gestaltet.

Am vom Schraubenkopf 384 der Schraube 380 abgewandten Ende kann eine Mutter verschraubt werden, die im wesentlichen derart gestaltet ist, wie es anhand der Fig. 14 erläutert wurde.

Diese Schrauben-Mutter-Verbindung ist insbesondere derart gestaltet, daß sie nicht mit konventionellen Werkzeugen, wie Zange oder Schraubendreher oder Schraubenschlüssel oder dergleichen, gelöst oder montiert werden kann, jedoch mit einer erfindungsgemäßen Werkzeugadapter-Vorrichtung.

Ein zu sicherndes Element 388, welches hier als Schraubverbindungseinrichtung für Rohre 390, 392 gestaltet ist, ist in der Verschlußvorrichtung 350 gefangen, so daß diese Schraubverbindungseinrichtung 388 nicht gelöst werden kann.

Die Rohre 390, 392, die alternativ beispielsweise auch ein Schaft sein können, erstrecken sich durch Ausnehmungen 394, 396, 398, 400, die in den Abdeckplatten 358, 360, 366, 368 vorgesehen sind. Die Schraubverbindungseinrichtung 388, welche beispielsweise mutterartig gestaltet sein, kann in der durch den Doppelpfeil 402 angedeuteten Axialrichtung nicht aus der Verschlußvorrichtung 350 bewegt werden, bzw. ist in der Verschlußvorrichtung 350 gefangen.

Fig. 18 zeigt die Verschlußvorrichtung 350 gemäß Fig. 17 aus Sicht der Linie 18-18.

Aus Fig. 18 kann insbesondere entnommen werden, daß die obere Abdeckplatte 366, die im wesentlichen versetzt und parallel zur untere Abdeckplatte 368 des Überwurfbügels 352 angeordnet ist, streifenförmig und U-förmig gestaltet ist, bzw. eine offenen Ausnehmung 398 aufweist, die U-förmig gestaltet ist. Ferner ist zu erkennen, daß die obere Abdeckplatte des Überwurfschlosses 354 eine halbkreisförmige Ausnehmung 398 aufweist, die im Randbereich dieser Abdeckplatte angeordnet ist. In geschlossenem Zustand der Verschlußvorrichtung 350 bilden diese Ausnehmungen 394, 3987 im Zusammenwirken eine kreisförmige Öffnung, welche bewirkt, daß die Schraubverbindungseinrichtung 388 gefangen ist und das Rohr 392 sich aus der Verschlußvorrichtung 350 heraus erstrecken kann. Die obere und die untere Abdeckplatte des Überwurfbügels 352 sind im wesentlichen identisch gestaltet.

Die obere und die untere Abdeckplatte des Überwurfschlosses 354 sind im wesentlichen identisch gestaltet.

Fig. 18 verdeutlicht ferner die U-förmige und streifenförmige Gestaltung der Seitenwandung 370 des Überwurfbügels 352.

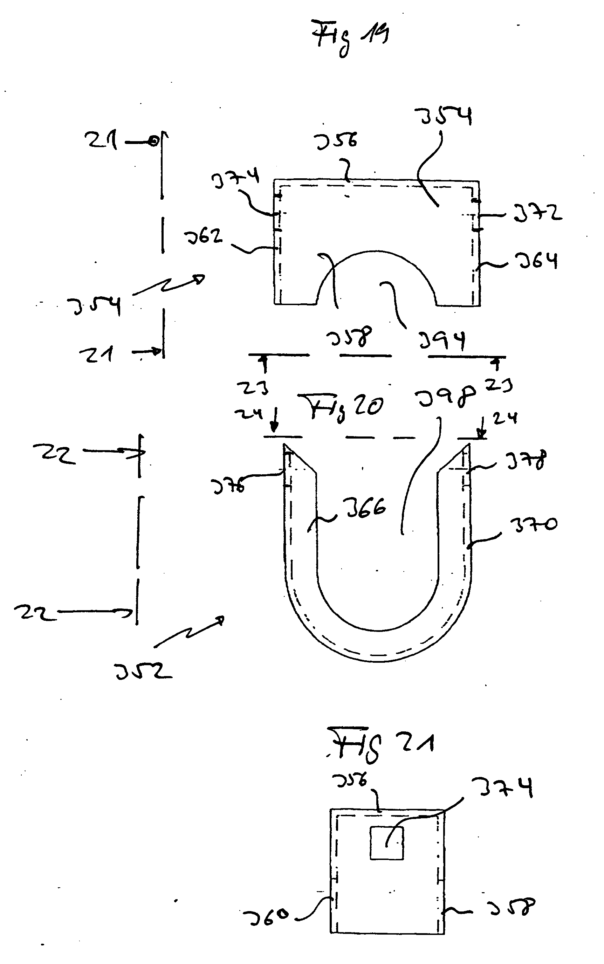

Fig. 19 zeigt eine Einzelteildarstellung eines Überwurfschlosses 354 gemäß den Fig. 17 und 18.

In Fig. 19 ist insbesondere die halbkreisförmige Ausnehmung 394 in der oberen Abdeckplatte 358 zu erkennen.

Fig. 20 zeigt eine Einzelteildarstellung eines Überwurfbügels 352 gemäß den Fig. 17 und 18.

Fig. 21 zeigt eine Ansicht entlang der Linie 21-21 aus Fig. 19.

In Fig. 21 ist insbesondere die quadratische Gestaltung der Öffnung 374 zu erkennen, die der Aufnahme der Schloßschraube dient.

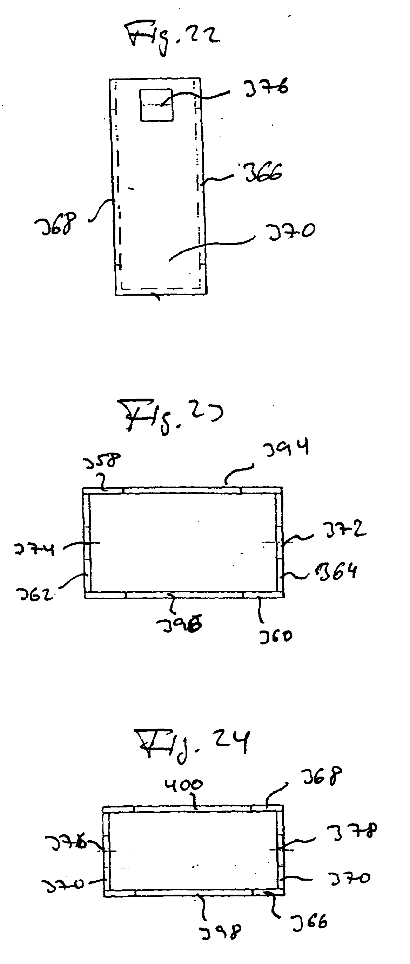

Fig. 22 zeigt eine Ansicht entlang der Linie 22-22 aus Fig. 20.

In Fig. 22 ist insbesondere die quadratische Gestaltung der Öffnung 376 zu erkennen, die der Aufnahme der Schloßschraube dient.

Fig. 23 zeigt eine Ansicht entlang der Linie 23-23 aus Fig. 19.

Fig. 24 zeigt eine Ansicht entlang der Linie 24-24 aus Fig. 20.

### Bezugszeichen

- 10: erste Baueinheit, Stopfen
- 12: Außenmantelfläche, Außenoberfläche
- 14: Gewinde von 12
- 16: Außenoberfläche
- 18: Bodenfläche
- 20: Stirnfläche
- 22: Vertiefung
- 24: Mantelfläche
- 26: Bodenbereich von 22
- 28: Übergangsbereich zwischen 24 und 26
- 30: Längsachse, Rotationsachse von 10
- 40: Werkzeugadapter
- 42: Außenteil von 40
- 44: Innenteil von 40
- 46: Pfeil
- 48: Öffnung von 42
- 50: Öffnungsquerschnitt
- 52: Abschnitt in 42
- 54: Wandung
- 56: Vertiefung in 52
- 60: käfigartiger Bereich, Käfig
- 62: Reibkörper
- 64: gestrichelte Linie
- 66: zentrale Längsachse von 40, 42, 44
- 68: Boden von 42
- 70: Öffnung von 68
- 72: Nut
- 74: Sicherungsring
- 82: Bereich von 44
- 84: Außenumfang von
- 90: Bereich von 82
- 92: unterer Bereich von 82
- 94: zylindrischen Bereich
- 96: Bereich von 44
- 98: Nut in 96
- 100: pyramidenstumpfartiger Bereich von 44
- 102: zylindrischer Bereich von 44
- 104: Außenoberfläche von 52
- 110: ebene Fläche
- 112: Pfeil, Umfangsrichtung von 62
- 114: Außenkontur von 112
- 130: Aufnahmebereich von 60 für 62
- 132: abgeflachte Ausnehmung in 114
- 134: Fase
- 150: Kontaktbereich zwischen 62 und 110
- 152: radial äußerer Bereich von 62
- 154: Außenmantelfläche von 60
- 160: Pfeil
- 180: Rohr
- 182: Öffnung von 180
- 184: rotationssymmetrischer Endbereich von 180
- 186: Innengewinde in 184
- 188: freiliegende Oberfläche von 10
- 190: Rohrinneres
- 210: Schraube
- 212: Innenteil
- 214: Außenteil
- 216: Schraubenkopf
- 218: unteres axiales Ende von 216
- 220: Schraubenschaft
- 222: Bereich von 220
- 224: Gewinde von 220
- 226: Bereich von 220
- 228: schraubenschaftabgewandtes Ende von 216
- 230: Stirnfläche von 216
- 232: rotationssymmetrische Vertiefung in 216
- 234: zentrale Längsachse von 210
- 236: Seitenwandung von 232
- 238: Bodenfläche von 232
- 240: Außenoberfläche
- 242: Nut in 240
- 244: Innenoberfläche von 214
- 246: Außenoberfläche von 214
- 248: Nut in 244
- 250: Sprengring
- 252: oberes Ende von 214
- 254: unteres Ende von 214
- 270: Bereich mit vermindertem Durchmesser von 240
- 272: Bereich mit vermindertem Durchmesser von 244
- 290: Mutter
- 292: Ende von 214 von 290
- 294: Öffnung in 290
- 296: Innenoberfläche von 294
- 298: Innengewinde an 296
- 300: Zwischenflansch
- 320: Sicherheitskappe
- 322: Bodenbereich von 294 von 320
- 324: Flächendichtung
- 326: Außengewinde von 328
- 328: Umbauteil
- 330: Länge von 214 in axialer Richtung
- 332: Länge von 216 in axialer Richtung
- 350: Verschlußvorrichtung
- 352: Überwurfbügel
- 354: Überwurfschloß
- 356: Bodenplatte von 354
- 358: obere Abdeckplatte von 354
- 360: untere Abdeckplatte von 354
- 362: Seitenwandung von 354
- 364: Seitenwandung von 354
- 366: obere Abdeckplatte von 352
- 368: untere Abdeckplatte von 352
- 370: Seitenwandung 252
- 372: Öffnung in 364
- 374: Öffnung in 362
- 376: Öffnung in 370
- 378: Öffnung in 370
- 380: Schraube
- 382: Schaft von 380
- 384: Schraubenkopf von 380
- 386: Ende von 380
- 388: Schraubverbindungseinrichtung
- 390: Rohr
- 392: Rohr
- 394: Ausnehmung in 358
- 396: Ausnehmung in 360
- 398: Ausnehmung in 366
- 400: Ausnehmung in 368
- 402: Doppelpfeil

## Patentansprüche

1. Sicherheitsvorrichtung zur Übertragung von Kräften, insbesondere zur Übertragung eines Drehmoments, mit einer ersten Baueinheit (10) und einer zweiten Baueinheit (40), wobei diese erste Baueinheit (10) und diese zweite Baueinheit (40) zur Kraft- oder Drehmomentübertragung miteinander verbindbar sind,
wobei
- die erste Baueinheit (10) eine im wesentlichen rotationssymmetrische Vertiefung (22) aufweist, welche im wesentlichen konzentrisch zu einer Achse (30), wie Drehachse angeordnet ist,
- die zweite Baueinheit (40) ein Verbindungsteil aufweist, welches in diese rotationssymmetrische Vertiefung (22) der ersten Baueinheit (10) einschiebbar ist;
- dieses Verbindungsteil wenigstens einen Reibkörper (62) aufweist, und
- weiterhin dieses Verbindungsteil eine Anpresseinrichtung aufweist, welche diesen Reibkörper (62) gegen eine Fläche (24) dieser rotationssymmetrischen Vertiefung (22) presst, so dass die Kraft- oder Drehmomentübertragung durch den Reibeingriff zwischen diesem Reibkörper (62) und dieser Fläche (24) in dieser Vertiefung (22) erfolgt,
**dadurch gekennzeichnet,**
**dass** die rotationssymmetrische Vertiefung (22) der ersten Baueinheit eine im wesentlichen unprofilierte Innenmantelfläche (24) aufweist, welche konisch gestaltet ist.

2. Sicherheitsstopfen, welcher einer ersten Baueinheit einer Sicherheitsvorrichtung nach Anspruch 1 entspricht, die eine Montage und Demontage dieses Stopfens (10) mittels der zweiten Baueinheit der Sicherheitsvorrichtung nach Anspruch 1 ermöglicht.

3. Befestigungselement-Vorrichtung, insbesondere Schraube (210) oder Mutter (290), welche Vorrichtung ein Innenteil (212) und ein Außenteil (214) aufweist, wobei dieses Außenteil (214) relativbeweglich zu diesem Innenteil (212) angeordnet ist, so daß ein in das Außenteil (214) eingeleitetes Drehmoment im wesentlichen nicht auf das Innenteil (212) übertragen wird, und wobei dieses Innenteil ein Gewinde aufweist, über welches es mit einem weiteren Bauteil (210, 290, 390, 392) verschraubt werden kann,
**dadurch gekennzeichnet,**
**dass** das Innenteil (212) als eine erste Baueinheit einer Sicherheitsvorrichtung nach Anspruch 1 ausgebildet ist.

4. Vorrichtung, oder Sicherheitstopfen, nach einem der vorangehenden Ansprüche,
**dadurch gekennzeichnet,**
**dass** die rotationssymmetrische Vertiefung (22) der ersten Baueinheit (10) eine im wesentlichen unprofilierte Bodenfläche (26) aufweist.

5. Vorrichtung, oder Sicherheitstopfen, nach einem der vorangehenden Ansprüche,
**dadurch gekennzeichnet,**
**dass** die erste Baueinheit (10) ein Gewinde (14) aufweist, über welches diese erste Baueinheit (10) an einer Einrichtung (180) montierbar und demontierbar ist, wobei dieses Gewinde (14) auf der Außenmantelfläche (12) der ersten Baueinheit (10) angeordnet ist oder als Innengewinde gestaltet ist.

6. Vorrichtung nach Anspruch 3 mit einer Verschlussvorrichtung und einem Montageteil (388), wie Schraubenkopf oder Rohrverbindungselement, und dergleichen, mit einem Überwurfelement (352), wie Überwurfbügel (352), und einem Überwurfschloss (354), wobei dieses Überwurfelement (352) und dieses Überwurfschloss (354) mittels eines Koppelmechanismus miteinander lösbar gekoppelt werden können und im gekoppelten Zustand das Montageteil (388) wenigstens teilweise abdecken, wobei das Montageteil (388) in diesem gekoppelten Zustand von der Verschlussvorrichtung gefangen ist, und wobei das Überwurfschloss (354) und das Überwurfelement (352) mittels der Befestigungselement-Vorrichtung gemäß Anspruch 3 lösbar gekoppelt werden kann.

7. Werkzeugadapter-Vorrichtung, welcher eine zweite Baueinheit einer Sicherheitsvorrichtung nach Anspruch 1 aufweist,
**dadurch gekennzeichnet,**
**dass** ein radial äußerer Bereich des wenigstens einen Reibkörpers (62) derart gestaltet ist, dass er im wesentlichen auf einer vorbestimmten fiktiven konischen Fläche angeordnet ist, die im wesentlichen der Innenmantelfläche der Vertiefung in einer ersten Baueinheit gemäß Anspruch 1 entsprechen kann.

## Claims

1. Safety device for the transmission of forces, particularly for the transmission of a torque, with a first unit (10) and a second unit (40), wherein this first unit (10) and this second unit (40) are connectable to each other for power or torque transmission,
wherein
- the first unit (10) comprises a substantially rotationally symmetrical depression (22), which is arranged essentially concentrical to an axis (30), like a rotation axis;
- the second unit (40) comprises a connecting part, which is insertable in this rotationally symmetrical depression (22) of the first unit (10);
- this connection part comprises at least one friction member (62), and
- furthermore this connection part comprises a press-on assembly, which presses this friction member (62) against a surface (24) of this rotationally symmetrical depression (22), so that the force or torque is transmitted by the frictional engagement between the friction members (62) and this surface (24) in this depression (22)
**characterized in that,**
the rotationally symmetrical depression (22) of the first unit comprises an essentially unprofiled lateral surface (24), which is formed conical.

2. Safety plug corresponding to a first unit of a safety device according to claim 1, which allows an assembly and disassembly of this plug (10) with the second unit of the safety device according to claim 1.

3. Fastener device, in particular screw (210) or nut (290), which device comprises an inner part (212) and an outer part (214), wherein this outer part (214) is arranged movable relative to this inner part (212), so that a torque initiated in the outer part (214) is essentially not transmitted to the inner part (212), and wherein the inner part comprises a thread, through which it can be screwed to another component (210, 290, 390, 392),
**characterized in that**
the inner part (212) is formed as a first unit of a safety device according to claim 1.

4. Device or safety plug according to one of the preceding claims, **characterized in that,** the rotationally symmetrical depression (22) of the first unit (10) comprises a substantially unprofiled bottom face (26).

5. Device or safety plug according to one of the preceding claims, **characterized in that,** the first unit (10) comprises a thread (14), through which this first component (10) is mountable and dismountable to a construction (180), whereby this thread (14) is arranged on the outer lateral area (12) of the first component (10), or is formed as an internal thread.

6. Device according to claim 3 with a locking device and a mounting part (388), such as screw head or pipe connecting element, and the like, with a retaining element (352), as retaining clamp (352), and a retaining closure (354), wherein this retaining element (352) and this retaining closure (354) can be coupled detachable together by means of a coupling mechanism and in the coupled state covering the mounting part (388) at least partially,
wherein the mounting part (388) is captured by the locking device in this coupled state, and wherein the retaining closure (354) and the retaining element (352) can be coupled detachable by means of the fastening element device according to claim 3.

7. Tool adapter device, which comprises a second unit of a safety device according to claim 1, **characterized in that**
a radially outer area of the at least one friction member (62) is formed in such a way, that it is arranged substantially at a predetermined fictive conical surface, which can suit substantially to the inner lateral area of the depression of a first unit according to claim 1.

## Revendications

1. Dispositif de sécurité pour la transmission d'efforts, notamment pour la transmission d'un couple, comprenant une première unité constitutive (10) et une deuxième unité constitutive (40), cette première unité constitutive (10) et cette deuxième unité constitutive (40) pouvant être reliées l'une à l'autre pour la transmission d'efforts ou de couples,
dispositif dans lequel
- la première unité constitutive (10) présente un creux (22) sensiblement à symétrie de rotation, qui est agencé sensiblement de manière concentrique à un axe (30), tel un axe de rotation,
- la deuxième unité constitutive (40) comprend une pièce de liaison, qui peut être insérée dans ce creux (22) à symétrie de rotation de la première unité constitutive (10),
- cette pièce de liaison présente au moins un corps de friction (62), et
- cette pièce de liaison présente par ailleurs un système d'application par pression, qui applique sous pression ledit corps de friction (62) contre une surface (24) dudit creux (22) à symétrie de rotation, de sorte que la transmission d'efforts ou de couples s'effectue grâce au contact par friction entre ce corps de friction (62) et cette surface (24) dans ce creux (22), **caractérisé**
**en ce que** le creux (22) à symétrie de rotation de la première unité constitutive présente une surface périphérique intérieure (24) sensiblement non profilée, qui est d'une configuration conique.

2. Bouchon de sécurité, qui correspond à une première unité constitutive d'un dispositif de sécurité selon la revendication 1, qui permet un montage et un démontage de ce bouchon (10) au moyen de la deuxième unité constitutive du dispositif de sécurité selon la revendication 1.

3. Dispositif formant élément de fixation, notamment vis (210) ou écrou (290), le dispositif présentant une pièce intérieure (212) et une pièce extérieure (214), cette pièce extérieure (214) étant agencée de manière relativement mobile par rapport à cette pièce intérieure (212), de sorte qu'un couple appliqué à la pièce extérieure (214) n'est sensiblement pas transmis à la pièce intérieure (212), et cette pièce intérieure présentant un filetage par l'intermédiaire duquel elle peut être reliée par vissage à une autre pièce (210, 290, 390, 392),
**caractérisé**
**en ce que** la pièce intérieure (212) est réalisée sous la forme d'une première unité constitutive d'un dispositif de sécurité selon la revendication 1.

4. Dispositif, ou bouchon de sécurité, selon l'une des revendications précédentes,
**caractérisé**
**en ce que** le creux (22) à symétrie de rotation de la première unité constitutive (10) présente une surface de fond (26) sensiblement non profilée.

5. Dispositif, ou bouchon de sécurité, selon l'une des revendications précédentes,
**caractérisé**
**en ce que** la première unité constitutive (10) présente un filetage (14) par l'intermédiaire duquel cette première unité constitutive (10) peut être montée sur un ensemble (180) et en être démontée, ce filetage (14) étant agencé sur la surface périphérique extérieure (12) de la première unité constitutive (10), ou réalisé sous la forme d'un filetage intérieur.

6. Dispositif selon la revendication 3, comprenant un dispositif de fermeture et une pièce de montage (388), telle une tête de vis ou un élément de raccord de tubes et analogues, et comprenant un élément de recouvrement (352), tel un étrier de recouvrement (352), ainsi qu'un fermoir de recouvrement (354), cet élément de recouvrement (352) et ce fermoir de recouvrement (354) pouvant être couplés l'un à l'autre de manière amovible au moyen d'un mécanisme de couplage, et recouvrant au moins partiellement la pièce de montage (388) dans l'état couplé, la pièce de montage (388) étant rendue captive par le dispositif de fermeture dans ledit état couplé, et le fermoir de recouvrement (354) et l'élément de recouvrement (352) pouvant être couplés de manière amovible au moyen du dispositif formant élément de fixation selon la revendication 3.

7. Dispositif adaptateur d'outil, qui comprend une deuxième unité constitutive d'un dispositif de sécurité selon la revendication 1,
**caractérisé**
**en ce qu'**une zone radialement extérieure dudit au moins un corps de friction (62) est configurée de façon à se situer sensiblement sur une surface conique fictive prédéterminée, qui peut correspondre sensiblement à la surface périphérique intérieure du creux dans une première unité constitutive selon la revendication 1.
